# EUROPEAN PATENT APPLICATION

(11) **EP 4 564 915 A1**
(43) Date of publication of application: **04.06.2025**
(21) Application number: 23856305.0
(22) Date of filing: 30.06.2023
(51) Int. Cl.: H04W 36/00

(54) **COMMUNICATION METHOD, APPARATUS AND SYSTEM, AND STORAGE MEDIUM**

(30) Priority: 25.08.2022 CN 202211027349
(71) Applicant: Huawei Technologies Co., Ltd., Shenzhen, Guangdong 518129 (CN)
(72) Inventor: CHANG, Tianhai, Shenzhen, Guangdong 518129 (CN); WANG, Xiang, Shenzhen, Guangdong 518129 (CN); SI, Xiaoshu, Shenzhen, Guangdong 518129 (CN); XU, Fan, Shenzhen, Guangdong 518129 (CN)
(74) Representative: Grünecker Patent- und Rechtsanwälte PartG mbB
(86) International application number: PCT/CN2023/104982
(87) International publication number: WO 2024/041215

(57) **Abstract**

This application discloses a communication method, apparatus, and system, and a storage medium, and belongs to the communications field. The method includes: A first access point AP obtains a first serial number based on a serial number of a first data unit, where the first data unit is a data unit that has been sent by the first AP to a terminal, and an AP that communicates with the terminal is switched from the first AP to a second AP. The first AP sends the first serial number. The second AP obtains a serial number of a second data unit based on the first serial number, where the second data unit is a data unit to be sent by the second AP to the terminal. In this application, interruption of transmission of service data can be avoided.

## Description

This application claims priority to Chinese Patent Application No. 202211027349.5, filed with the China National Intellectual Property Administration on August 25, 2022 and entitled "COMMUNICATION METHOD, APPARATUS, AND SYSTEM, AND STORAGE MEDIUM", which is incorporated herein by reference in its entirety.

### TECHNICAL FIELD

This application relates to the communications field, and in particular, to a communication method, apparatus, system, and a storage medium.

### BACKGROUND

In a wireless fidelity (wireless fidelity, Wi-Fi) network, an access point (access point, AP) provides an access service for a terminal. The AP is configured to send a data unit to the terminal, where the data unit has a serial number, and the serial number is obtained by the AP by performing serial numbering on the data unit. The terminal receives the data unit based on the serial number of the data unit.

In the Wi-Fi network, the terminal roams to access a new AP. The new AP sends a data unit to the terminal, where a serial number of the data unit is obtained by the new AP by performing serial numbering on the data unit. The terminal may determine, based on the serial number of the data unit sent by the new AP, that the data unit sent by the new AP is a repeatedly received data unit, and discard the received data unit. Consequently, transmission of service data is interrupted.

### SUMMARY

This application provides a communication method, apparatus, and system, and a storage medium, to avoid interruption of transmission of service data. The technical solutions are as follows:

According to a first aspect, this application provides a communication method. In the method, a first access point AP obtains a serial number of a first data unit that has been sent to a terminal, obtains a first serial number based on the serial number of the first data unit, and sends the first serial number, where an AP that communicates with the terminal is switched from the first AP to a second AP. The second AP obtains a serial number of a second data unit based on the first serial number, where the second data unit is a data unit to be sent by the second AP to the terminal.

The first data unit is a first data unit that has been sent by the first AP to the terminal. A value of an anti-replay counter for receiving a data unit and in the terminal is less than or equal to the serial number of the first data unit, and/or a start position of a receive window for receiving the data unit is obtained based on the serial number of the first data unit. The first AP obtains the first serial number based on the serial number of the first data unit, and the second AP obtains, based on the first serial number, the serial number of the second data unit to be sent to the terminal, so that the terminal can successfully receive, based on the anti-replay counter and/or the receive window, a data unit sent by the second AP, to avoid interruption of transmission of service data.

In a possible implementation, the first serial number is the serial number of the first data unit, or the first serial number is a sum of the serial number of the first data unit and a first value, where the first value indicates a quantity of data units sent by the first AP to the terminal after the first AP sends the first data unit. In this way, a manner of obtaining the first serial number is enriched, and flexibility of obtaining the first serial number is improved.

In another possible implementation, the first AP obtains a serial number of a third data unit that is sent by the terminal and that has been received, and sends the serial number of the third data unit. The second AP obtains a receive window based on the serial number of the third data unit, where the receive window is for receiving a data unit sent by the terminal.

Because the third data unit is a data unit that is sent by the terminal and that has been received by the first AP, after the terminal is handed over to the second AP, a serial number of a data unit to be sent by the terminal to the second AP is obtained by increasing the serial number of the third data unit. The second AP obtains the receive window based on the serial number of the third data unit, to ensure that the second AP can successfully receive, based on the receive window, a data unit sent by the terminal, to avoid interruption of transmission of service data.

In another possible implementation, the third data unit is a data unit that belongs to a first service. The first AP sends a service identifier of the first service. The second AP obtains the receive window based on the serial number of the third data unit and the service identifier of the first service, where the receive window is for receiving a data unit that is sent by the terminal and that belongs to the first service. The second AP obtains, based on the service identifier of the first service, the receive window corresponding to the first service, and can successfully receive, by using the receive window, the data unit that is of the first service and that is sent by the terminal, to avoid interruption of transmission of service data that belongs to the first service.

In another possible implementation, the first AP sends identification information of a first frequency resource, where the first frequency resource is a frequency resource used by the first AP to send the first data unit. The second AP sends the second data unit by using the first frequency resource based on the identification information. Because the first frequency resource is the frequency resource used by the first AP to send the first data unit, the first AP sends the identification information of the first frequency resource, so that the second AP sends the second data unit by using the first frequency resource. In this way, service data transmitted between the terminal and the first AP is seamlessly switched to the second AP, to avoid interruption of transmission of the service data.

In another possible implementation, the serial number of the first data unit includes a packet number PN of the first data unit, and the PN is for numbering a data unit sent to the terminal. In this way, it is ensured that the second AP can obtain a PN of the second data unit, and it is ensured that the terminal successfully receives, based on the anti-replay counter, the second data unit sent by the second AP, to prevent the terminal from refusing to receive the second data unit.

In another possible implementation, the first data unit is a data unit that belongs to a second service, the serial number of the first data unit further includes a sequence number SN of the first data unit, and the SN is for numbering a data unit that belongs to the second service. In this way, it is ensured that the second AP can obtain an SN of the second data unit, and it is ensured that the terminal can successfully receive, based on the receive window, the second data unit sent by the second AP, to prevent the terminal from refusing to receive the second data unit.

In another possible implementation, the first AP sends a service identifier of the second service, to ensure that the second AP obtains, based on the first serial number, the serial number of the second data unit that belongs to the second service. In this way, the terminal can successfully receive, based on the anti-replay counter and/or the receive window, a data unit that is sent by the second AP and that belongs to the second service, to avoid interruption of transmission service data that belongs to the second service.

In another possible implementation, the first serial number includes the serial number of the first data unit, and the serial number of the first data unit includes the PN and the SN of the first data unit. The first AP sends a first packet to a controller, where the first packet includes a packet number field and a sequence number field, the packet number field includes the PN of the first data unit, and the sequence number field includes the SN of the first data unit. The controller sends a second packet to the second AP, where the second packet includes the packet number field and the sequence number field. In this way, the controller can successfully forward the first serial number to the second AP.

In another possible implementation, the first data unit is a last data unit that has been sent by the first AP to the terminal when the AP that communicates with the terminal is switched from the first AP to the second AP, or the first data unit is a previous data unit of the last data unit. In this way, a manner of obtaining the first data unit is enriched, and flexibility of obtaining the serial number of the first data unit is improved.

According to a second aspect, this application provides a communication method. In the method, a first access point AP obtains a serial number of a first data unit that has been sent to a terminal, and obtains a first serial number based on the serial number of the first data unit, where an AP that communicates with the terminal is switched from the first AP to a second AP. The first AP sends the first serial number, where the first serial number indicates a serial number of a second data unit, and the second data unit is a data unit to be sent by the second AP to the terminal.

The first data unit is a first data unit that has been sent by the first AP to the terminal. A value of an anti-replay counter for receiving a data unit and in the terminal is less than or equal to the serial number of the first data unit, and/or a start position of a receive window for receiving the data unit is obtained based on the serial number of the first data unit. The first AP obtains the first serial number based on the serial number of the first data unit, where the first serial number indicates the serial number of the second data unit. In this way, the second AP obtains, based on the first serial number, the serial number of the second data unit to be sent to the terminal, so that the terminal can successfully receive, based on the anti-replay counter and/or the receive window, a data unit sent by the second AP, to avoid interruption of transmission of service data.

In a possible implementation, the first serial number is the serial number of the first data unit, or the first serial number is a sum of the serial number of the first data unit and a first value, where the first value indicates a quantity of data units sent by the first AP to the terminal after the first AP sends the first data unit. In this way, a manner of obtaining the first serial number is enriched, and flexibility of obtaining the first serial number is improved.

In another possible implementation, the first AP sends a serial number of a third data unit, where the third data unit is a data unit that is sent by the terminal and that has been received by the first AP, the serial number of the third data unit indicates the second AP to obtain a receive window, and the receive window is for receiving a data unit sent by the terminal.

Because the third data unit is a data unit that is sent by the terminal and that has been received by the first AP, after the terminal is handed over to the second AP, a serial number of a data unit to be sent by the terminal to the second AP is obtained by increasing the serial number of the third data unit. The second AP obtains the receive window based on the serial number of the third data unit, to ensure that the second AP can successfully receive, based on the receive window, a data unit sent by the terminal, to avoid interruption of transmission of service data.

In another possible implementation, the third data unit is a data unit that belongs to a first service. The first AP sends a service identifier of the first service, where the receive window is for receiving a data unit that is sent by the terminal and that belongs to the first service. In this way, the receive window obtained by the second AP corresponds to the first service, and the data unit that is of the first service and that is sent by the terminal can be successfully received by using the receive window, to avoid interruption of transmission of service data that belongs to the first service.

In another possible implementation, the first AP sends identification information of a first frequency resource, where the first frequency resource is a frequency resource used by the first AP to send the first data unit, and the identification information of the first frequency resource indicates the second AP to send the second data unit by using the first frequency resource. In this way, service data transmitted between the terminal and the first AP is seamlessly switched to the second AP, to avoid interruption of transmission of the service data.

In another possible implementation, the serial number of the first data unit includes a packet number PN of the first data unit, and the PN is for numbering a data unit sent to the terminal. In this way, it is ensured that the second AP can obtain a PN of the second data unit, and it is ensured that the terminal successfully receives, based on the anti-replay counter, the second data unit sent by the second AP, to prevent the terminal from refusing to receive the second data unit.

In another possible implementation, the first data unit is a data unit that belongs to a second service, the serial number of the first data unit further includes a sequence number SN of the first data unit, and the SN is for numbering a data unit that belongs to the second service. In this way, it is ensured that the second AP can obtain an SN of the second data unit, and it is ensured that the terminal can successfully receive, based on the receive window, the second data unit sent by the second AP, to prevent the terminal from refusing to receive the second data unit.

In another possible implementation, the first AP sends a service identifier of the second service, to ensure that the second AP obtains, based on the first serial number, the serial number of the second data unit that belongs to the second service. In this way, the terminal can successfully receive, based on the anti-replay counter and/or the receive window, a data unit that is sent by the second AP and that belongs to the second service, to avoid interruption of transmission service data that belongs to the second service.

In another possible implementation, the first serial number includes the serial number of the first data unit, and the serial number of the first data unit includes the PN and the SN of the first data unit. The first AP sends a first packet to a controller, where the first packet includes a packet number field and a sequence number field, the packet number field includes the PN of the first data unit, the sequence number field includes the SN of the first data unit, the first packet is for triggering the controller to send a second packet to the second AP, and the second packet includes the packet number field and the sequence number field. In this way, the controller can successfully forward the first serial number to the second AP.

In another possible implementation, the first data unit is a last data unit that has been sent by the first AP to the terminal when the AP that communicates with the terminal is switched from the first AP to the second AP, or the first data unit is a previous data unit of the last data unit. In this way, a manner of obtaining the first data unit is enriched, and flexibility of obtaining the serial number of the first data unit is improved.

According to a third aspect, this application provides a communication method. In the method, a second access point AP receives a first serial number, where the first serial number is obtained by a first AP based on a serial number of a first data unit, the first data unit is a data unit that has been sent by the first AP to a terminal, and an AP that communicates with the terminal is switched from the first AP to the second AP. The second AP obtains a serial number of a second data unit based on the first serial number, where the second data unit is a data unit to be sent by the second AP to the terminal.

The first data unit is a first data unit that has been sent by the first AP to the terminal. A value of an anti-replay counter for receiving a data unit and in the terminal is less than or equal to the serial number of the first data unit, and/or a start position of a receive window for receiving the data unit is obtained based on the serial number of the first data unit. The first serial number is obtained based on the serial number of the first data unit, and the second AP obtains, based on the first serial number, the serial number of the second data unit to be sent to the terminal, so that the terminal can successfully receive, based on the anti-replay counter and/or the receive window, a data unit sent by the second AP, to avoid interruption of transmission of service data.

In a possible implementation, the first serial number is the serial number of the first data unit, or the first serial number is a sum of the serial number of the first data unit and a first value, where the first value indicates a quantity of data units sent by the first AP to the terminal after the first AP sends the first data unit. In this way, a manner of obtaining the first serial number is enriched, and flexibility of obtaining the first serial number is improved.

In a possible implementation, the second AP receives a serial number of a third data unit, where the third data unit is a data unit that is sent by the terminal and that has been received by the first AP. The second AP obtains a receive window based on the serial number of the third data unit, where the receive window is for receiving a data unit sent by the terminal.

Because the third data unit is a data unit that is sent by the terminal and that has been received by the first AP, after the terminal is handed over to the second AP, a serial number of a data unit to be sent by the terminal to the second AP is obtained by increasing the serial number of the third data unit. The second AP obtains the receive window based on the serial number of the third data unit, to ensure that the second AP can successfully receive, based on the receive window, a data unit sent by the terminal, to avoid interruption of transmission of service data.

In another possible implementation, the third data unit is a data unit that belongs to a first service. The second AP receives a service identifier of the first service. The second AP obtains the receive window based on the serial number of the third data unit and the service identifier of the first service, where the receive window is for receiving a data unit that is sent by the terminal and that belongs to the first service. In this way, the receive window corresponds to the first service, and the second AP can successfully receive, by using the receive window, the data unit that is of the first service and that is sent by the terminal, to avoid interruption of transmission of service data that belongs to the first service.

In another possible implementation, the second AP includes an anti-replay counter, and the anti-replay counter is configured to record a quantity of successfully received data units sent by the terminal. The second AP sets an initial value of the anti-replay counter to be less than or equal to the serial number of the third data unit. In this way, the second AP can successfully receive, based on the anti-replay counter, a data unit sent by the terminal to the second AP, to avoid interruption of transmission of service data.

In another possible implementation, the second AP receives identification information of a first frequency resource, where the first frequency resource is a frequency resource used by the first AP to send the first data unit. The second AP sends the second data unit to the terminal by using the first frequency resource based on the identification information. In this way, service data transmitted between the terminal and the first AP is seamlessly switched to the second AP, to avoid interruption of transmission of the service data.

In another possible implementation, the serial number of the first data unit includes a packet number PN of the first data unit, and the PN is for numbering a data unit sent to the terminal. In this way, it is ensured that the second AP can obtain a PN of the second data unit, and it is ensured that the terminal successfully receives, based on the anti-replay counter, the second data unit sent by the second AP, to prevent the terminal from refusing to receive the second data unit.

In another possible implementation, the first data unit is a data unit that belongs to a second service, the serial number of the first data unit further includes a sequence number SN of the first data unit, and the SN is for numbering a data unit that belongs to the second service. In this way, it is ensured that the second AP can obtain an SN of the second data unit, and it is ensured that the terminal can successfully receive, based on the receive window, the second data unit sent by the second AP, to prevent the terminal from refusing to receive the second data unit.

In another possible implementation, the second AP receives a service identifier of the second service, to ensure that the second AP obtains, based on the first serial number, the serial number of the second data unit that belongs to the second service. In this way, the terminal can successfully receive, based on the anti-replay counter and/or the receive window, a data unit that is sent by the second AP and that belongs to the second service, to avoid interruption of transmission service data that belongs to the second service.

In another possible implementation, the first serial number includes the serial number of the first data unit, and the serial number of the first data unit includes the PN and the SN of the first data unit. The second AP receives a second packet sent by a controller, where the second packet includes a packet number field and a sequence number field, the packet number field includes the PN of the first data unit, the sequence number field includes the SN of the first data unit, the second packet is sent by the controller based on a received first packet from the first AP, and the first packet includes the packet number field and the sequence number field. In this way, the controller can successfully forward the first serial number to the second AP.

In another possible implementation, the first data unit is a last data unit that has been sent by the first AP to the terminal when the AP that communicates with the terminal is switched from the first AP to the second AP, or the first data unit is a previous data unit of the last data unit. In this way, a manner of obtaining the first data unit is enriched, and flexibility of obtaining the serial number of the first data unit is improved.

According to a fourth aspect, this application provides a communication method. In the method, a controller receives a first serial number sent by a first access point AP, where the first serial number is obtained by the first AP based on a serial number of a first data unit, the first data unit is a data unit that has been sent by the first AP to a terminal, and an AP that communicates with the terminal is switched from the first AP to a second AP. The controller sends the first serial number to the second AP, where the first serial number indicates a serial number of a second data unit, and the second data unit is a data unit to be sent by the second AP to the terminal.

The first data unit is a first data unit that has been sent by the first AP to the terminal, and the first serial number is obtained based on the serial number of the first data unit. A value of an anti-replay counter for receiving a data unit and in the terminal is less than or equal to the serial number of the first data unit, and/or a start position of a receive window for receiving the data unit is obtained based on the serial number of the first data unit. The controller receives the first serial number, and sends the first serial number to the second AP, and the second AP obtains, based on the first serial number, the serial number of the second data unit to be sent to the terminal, so that the terminal can successfully receive, based on the anti-replay counter and/or the receive window, a data unit sent by the second AP, to avoid interruption of transmission of service data.

In a possible implementation, the first serial number is the serial number of the first data unit, or the first serial number is a sum of the serial number of the first data unit and a first value, where the first value indicates a quantity of data units sent by the first AP to the terminal after the first AP sends the first data unit. In this way, a manner of obtaining the first serial number is enriched, and flexibility of obtaining the first serial number is improved.

In another possible implementation, the controller receives a serial number that is of a third data unit and that is sent by the first AP, where the third data unit is a data unit that is sent by the terminal and that has been received by the first AP. The controller sends the serial number of the third data unit to the second AP, where the serial number of the third data unit indicates the second AP to obtain a receive window, and the receive window is for receiving a data unit sent by the terminal.

Because the third data unit is a data unit that is sent by the terminal and that has been received by the first AP, after the terminal is handed over to the second AP, a serial number of a data unit to be sent by the terminal to the second AP is obtained by increasing the serial number of the third data unit. The second AP obtains the receive window based on the serial number of the third data unit, to ensure that the second AP can successfully receive, based on the receive window, a data unit sent by the terminal, to avoid interruption of transmission of service data.

In another possible implementation, the third data unit is a data unit that belongs to a first service. The controller receives a service identifier that is of the first service and that is sent by the first AP. The controller sends the service identifier of the first service to the second AP. In this way, the second AP obtains, based on the service identifier of the first service, the receive window corresponding to the first service, and can successfully receive, by using the receive window, a data unit that is of the first service and that is sent by the terminal, to avoid interruption of transmission of service data that belongs to the first service.

In another possible implementation, the controller receives identification information that is of a first frequency resource and that is sent by the first AP, where the first frequency resource is a frequency resource used by the first AP to send the first data unit. The controller sends the identification information of the first frequency resource to the second AP. In this way, the second AP sends the second data unit by using the first frequency resource based on the identification information. Because the first frequency resource is the frequency resource used by the first AP to send the first data unit, the first AP sends the identification information of the first frequency resource, so that the second AP sends the second data unit by using the first frequency resource. In this way, service data transmitted between the terminal and the first AP is seamlessly switched to the second AP, to avoid interruption of transmission of the service data.

In another possible implementation, the serial number of the first data unit includes a packet number PN of the first data unit, and the PN is for numbering a data unit sent to the terminal. In this way, it is ensured that the second AP can obtain a PN of the second data unit, and it is ensured that the terminal successfully receives, based on the anti-replay counter, the second data unit sent by the second AP, to prevent the terminal from refusing to receive the second data unit.

In another possible implementation, the first data unit is a data unit that belongs to a second service, the serial number of the first data unit further includes a sequence number SN of the first data unit, and the SN is for numbering a data unit that belongs to the second service. In this way, it is ensured that the second AP can obtain an SN of the second data unit, and it is ensured that the terminal can successfully receive, based on the receive window, the second data unit sent by the second AP, to prevent the terminal from refusing to receive the second data unit.

In another possible implementation, the controller receives a service identifier that is of the second service and that is sent by the first AP. The controller sends the service identifier of the second service to the second AP, to ensure that the second AP obtains, based on the first serial number, the serial number of the second data unit that belongs to the second service. In this way, the terminal can successfully receive, based on the anti-replay counter and/or the receive window, a data unit that is sent by the second AP and that belongs to the second service, to avoid interruption of transmission service data that belongs to the second service.

In another possible implementation, the first serial number includes the serial number of the first data unit, and the serial number of the first data unit includes the PN and the SN of the first data unit. The controller receives a first packet sent by the first AP, where the first packet includes a packet number field and a sequence number field, the packet number field includes the PN of the first data unit, and the sequence number field includes the SN of the first data unit. The controller sends a second packet to the second AP, where the second packet includes the packet number field and the sequence number field. In this way, the controller can successfully forward the first serial number to the second AP.

In another possible implementation, the first data unit is a last data unit that has been sent by the first AP to the terminal when the AP that communicates with the terminal is switched from the first AP to the second AP, or the first data unit is a previous data unit of the last data unit. In this way, a manner of obtaining the first data unit is enriched, and flexibility of obtaining the serial number of the first data unit is improved.

According to a fifth aspect, this application provides a communication apparatus, configured to perform the method according to any one of the second aspect or the possible implementations of the second aspect. Specifically, the apparatus includes units configured to perform the method according to any one of the second aspect or the possible implementations of the second aspect.

According to a sixth aspect, this application provides a communication apparatus, configured to perform the method according to any one of the third aspect or the possible implementations of the third aspect. Specifically, the apparatus includes units configured to perform the method according to any one of the third aspect or the possible implementations of the third aspect.

According to a seventh aspect, this application provides a communication apparatus, configured to perform the method according to any one of the fourth aspect or the possible implementations of the fourth aspect. Specifically, the apparatus includes units configured to perform the method according to any one of the fourth aspect or the possible implementations of the fourth aspect.

According to an eighth aspect, this application provides a first access point AP. The first AP includes a memory, a processor, and a computer program stored in the memory. When the processor executes the computer program, the first AP is enabled to complete the method according to any one of the second aspect or the possible implementations of the second aspect.

According to a ninth aspect, this application provides a second access point AP. The second AP includes a memory, a processor, and a computer program stored in the memory. When the processor executes the computer program, the second AP is enabled to complete the method according to any one of the third aspect or the possible implementations of the third aspect.

According to a tenth aspect, this application provides a controller. The controller includes a memory, a processor, and a computer program stored in the memory. When the processor executes the computer program, the controller is enabled to complete the method according to any one of the fourth aspect or the possible implementations of the fourth aspect.

According to an eleventh aspect, this application provides a computer program product. The computer program product includes a computer program stored in a computer-readable storage medium. In addition, the computing program is loaded by using a processor, to implement the method according to any one of the second aspect, the third aspect, the fourth aspect, the possible implementations of the second aspect, the possible implementations of the third aspect, or the possible implementations of the fourth aspect.

According to a twelfth aspect, this application provides a computer-readable storage medium, configured to store a computer program or instructions. The computer program or the instructions are loaded by using a processor, to implement the method according to any one of the second aspect, the third aspect, the fourth aspect, the possible implementations of the second aspect, the possible implementations of the third aspect, or the possible implementations of the fourth aspect.

According to a thirteenth aspect, this application provides a chip, including a memory and a processor. The memory is configured to store computer instructions. The processor is configured to invoke the computer instructions from the memory and run the computer instructions, to implement the method according to any one of the second aspect, the third aspect, the fourth aspect, the possible implementations of the second aspect, the possible implementations of the third aspect, or the possible implementations of the fourth aspect.

According to a fourteenth aspect, this application provides a communication system, including the communication apparatus according to the fifth aspect and the communication apparatus according to the sixth aspect, or including the first AP according to the eighth aspect and the second AP according to the ninth aspect.

In a possible implementation, the system further includes the communication apparatus according to the seventh aspect or the controller according to the tenth aspect.

### BRIEF DESCRIPTION OF DRAWINGS

FIG. 1 is a schematic diagram of a network architecture according to an embodiment of this application;
FIG. 2 is a schematic diagram of another network architecture according to an embodiment of this application;
FIG. 3 is a schematic diagram of a receive window according to an embodiment of this application;
FIG. 4 is a flowchart of a communication method according to an embodiment of this application;
FIG. 5 is a schematic diagram of a structure of a first packet according to an embodiment of this application;
FIG. 6 is a schematic diagram of encrypting a data unit according to an embodiment of this application;
FIG. 7 is a flowchart of another communication method according to an embodiment of this application;
FIG. 8 is a schematic diagram of a structure of another first packet according to an embodiment of this application;
FIG. 9 is a schematic diagram of a structure of a communication apparatus according to an embodiment of this application;
FIG. 10 is a schematic diagram of a structure of another communication apparatus according to an embodiment of this application;
FIG. 11 is a schematic diagram of a structure of another communication apparatus according to an embodiment of this application;
FIG. 12 is a schematic diagram of a structure of a device according to an embodiment of this application; and
FIG. 13 is a schematic diagram of a structure of a communication system according to an embodiment of this application.

### DESCRIPTION OF EMBODIMENTS

The following further describes in detail implementations of this application with reference to accompanying drawings.

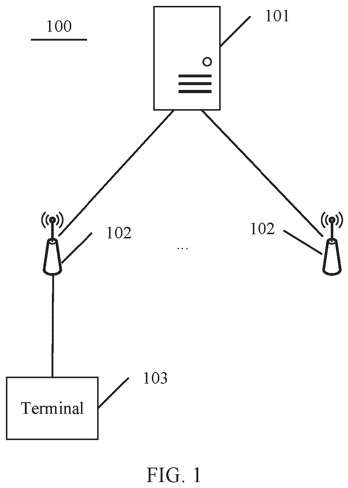

Refer to FIG. 1. An embodiment of this application provides a network architecture 100. The network architecture 100 includes a controller 101 and a plurality of APs 102.

The controller 101 is configured to manage the plurality of APs 102. For any AP 102, the AP 102 provides an access service for a terminal 103, so that the terminal 103 can access the AP 102, and communicate with the AP 102.

In some embodiments, the terminal 103 can access one AP 102, or the terminal 103 can access a subnetwork, where the subnetwork includes a plurality of APs 102. When the terminal 103 accesses the subnetwork, one of the plurality of APs 102 included in the subnetwork is a primary AP, an AP other than the primary AP in the plurality of APs 102 is a backup AP, the terminal 103 communicates with the primary AP, and each backup AP includes identity information of the terminal 103.

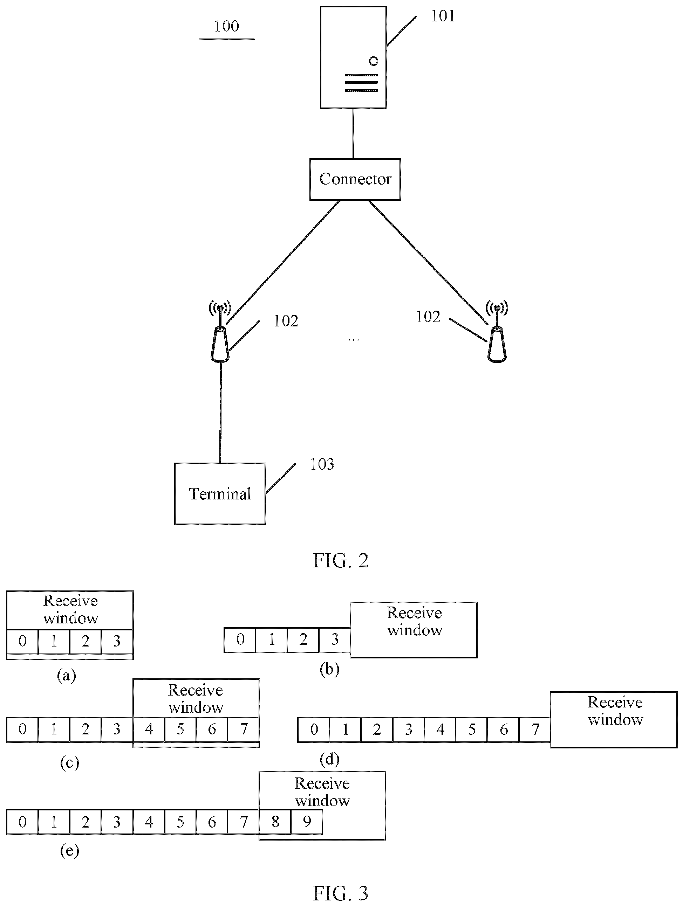

In some embodiments, refer to FIG. 2. The network architecture 100 further includes a connector 104, and the controller 101 communicates with any AP 102 via the connector 104. The connector 104 includes an optical splitter.

In some embodiments, to improve signal coverage, the plurality of APs 102 are networked to form a Wi-Fi network having wide coverage. Optionally, the foregoing subnetwork is a part of the Wi-Fi network.

Networking manners of networking the plurality of APs 102 are classified into networking with a same basic service set (basic service set identification, BSSID) and networking with different BSSIDs. In the networking with a same BSSID, BSSIDs of all APs are the same, the terminal 103 roams from coverage of an accessed AP to coverage of another AP, an AP accessed by the terminal 103 may be switched from the AP to the another AP, the terminal 103 accesses the another AP, and does not sense that AP switching occurs, and the terminal 103 does not perform a process of authentication, association, and key agreement with the another AP.

However, in the networking with different BSSIDs, BSSIDs of all APs are different, the terminal 103 roams from coverage of an accessed AP to coverage of another AP, an AP accessed by the terminal 103 may be switched from the AP to the another AP, and the terminal 103 accesses the another AP, and needs to perform a process of authentication, association, and key agreement with the another AP.

In the foregoing subnetwork, when an AP that communicates with the terminal 103 is switched from the primary AP to the backup AP, because the backup AP includes the identity information of the terminal 103, the terminal 103 does not perform the process of authentication, association, and key agreement with the backup AP either.

Service data is exchanged when the terminal 103 communicates with the AP 102, where the service data includes at least one data unit, and each data unit has a serial number.

The terminal 103 can send a data unit to the AP 102, where a serial number of the data unit is obtained by increasing a serial number of a previous data unit sent by the terminal 103, the data unit belongs to first service data sent by the terminal 103 to the AP 102, the first service data belongs to a first service, the first service is an uplink service, and the first service data is uplink service data. Optionally, the serial number of the data unit is obtained by adding 1 to the serial number of the previous data unit sent by the terminal 103.

The AP 102 can send a data unit to the terminal 103, where a serial number of the data unit is obtained by increasing a serial number of a previous data unit sent by the AP 102, the data unit belongs to second service data sent by the AP 102 to the terminal 103, the second service data belongs to a second service, the second service is a downlink service, and the second service data is downlink service data. Optionally, the serial number of the data unit is obtained by adding 1 to the serial number of the previous data unit sent by the AP 102.

The serial number of the data unit includes a packet number (packet number, PN) of the data unit, and the PN is for numbering the data unit sent to the terminal 103.

The terminal 103 includes a first anti-replay counter, and the first anti-replay counter is configured to count data units successfully received by the terminal 103. The AP 102 includes a second anti-replay counter, and the second anti-replay counter is configured to count data units successfully received by the AP 102.

For data units in a downlink direction, the data units in the downlink direction include data units sent by the AP 102 to the terminal 103, the data units are data units of the second service data, and the AP 102 initializes an initial value of a PN of the 1^{st} data unit to be sent to the terminal 103. For an n^{th} data unit to be sent to the terminal 103, a PN of the n^{th} data unit is equal to a PN of an (n-1)^{th} data unit plus P, where n=2, 3, 4, ..., and P is an integer value greater than 0, and is a specified integer value. The terminal 103 initializes an initial value of the first anti-replay counter, where the initial value of the first anti-replay counter is less than or equal to the PN of the 1^{st} data unit. Each time the terminal 103 receives a data unit sent by the AP 102, the terminal 103 compares whether a PN of the data unit is greater than or equal to a count value of the first anti-replay counter. If a comparison result is that the PN of the data unit is less than the count value of the first anti-replay counter, it indicates that the data unit may be a data unit repeatedly received by the terminal 103, and the data unit is discarded. If a comparison result is that the PN of the data unit is greater than or equal to the count value of the first anti-replay counter, P is added to the count value of the first anti-replay counter, and an acknowledgment message is sent to the AP 102, where the acknowledgment message indicates that the terminal 103 successfully receives the data unit.

For example, the terminal 103 initializes the initial value of the first anti-replay counter to 0, and the AP 102 initializes the PN of the 1^{st} data unit to be sent to the terminal 103 to be equal to 0. It is assumed that P=1, the terminal 103 receives the 1^{st} data unit sent by the AP 102, and the PN of the 1^{st} data unit is equal to the count value of the first anti-replay counter. 1 is added to the count value of the first anti-replay counter (where the count value of the first anti-replay counter changes to 1), and an acknowledgment message is sent to the AP 102, where the acknowledgment message indicates that the terminal 103 successfully receives the 1^{st} data unit. The AP 102 receives the acknowledgment message, and sends the 2^{nd} data unit to the terminal 103, where a PN of the 2^{nd} data unit is equal to the PN of the 1^{st} data unit plus 1. That is, the PN of the 2^{nd} data unit is equal to 0 plus 1, that is, equal to 1. The 2^{nd} data unit is sent to the terminal 103. The terminal 103 receives the 2^{nd} data unit sent by the AP 102, the PN of the 2^{nd} data unit is equal to 1, the count value of the first anti-replay counter is 1, and the PN of the 2^{nd} data unit is equal to the count value of the first anti-replay counter. 1 is added to the count value of the first anti-replay counter (where the count value of the first anti-replay counter changes to 2), and an acknowledgment message is sent to the AP 102, where the acknowledgment message indicates that the terminal 103 successfully receives the 2^{nd} data unit. The foregoing process is repeated, and the terminal 103 receives the 3^{rd} data unit, the 4^{th} data unit, .... Likewise, for a process in which the terminal 103 sends data units to the AP 102, refer to the foregoing process in which the AP 102 sends the data units to the terminal 103. Details are not described herein again.

In some embodiments, the serial number of the data unit further includes a sequence number (sequence number, SN) of the data unit. The data unit belongs to service data exchanged between the AP 102 and the terminal 103. For a service to which the service data belongs, the SN is for numbering a data unit that belongs to the service.

The AP 102 may send a plurality of pieces of different service data to the terminal 103. For the 1^{st} data unit of a piece of service data, the AP 102 initializes an initial value of an SN of the 1^{st} data unit of the service data. For an m^{th} data unit of the service data, if an SN of an (m-1)^{th} data unit plus S is less than or equal to a specified SN threshold, an SN of the m^{th} data unit is equal to the SN of the (m-1)^{th} data unit plus S, where m=2, 3, 4, ..., and S is an integer value greater than 0, and is a specified integer value. If an SN of an (m-1)^{th} data unit plus S is greater than a specified SN threshold, an SN of the m^{th} data unit of the service data is initialized.

A length of the SN is a plurality of bits, and the specified SN threshold is a maximum integer value indicated by the plurality of bits. Assuming that the length of the SN is 12 bits, the specified SN threshold is 4095. The AP 102 initializes the SN of the 1^{st} data unit of the service data to be equal to 0. For the m^{th} data unit of the service data, if the SN of the (m-1)^{th} data unit plus S is less than or equal to 4095, the SN of the m^{th} data unit is equal to the SN of the (m-1)^{th} data unit plus S; or if the SN of the (m-1)^{th} data unit plus S is greater than 4095, the SN of the m^{th} data unit of the service data is initialized to be equal to 0.

For example, it is assumed that S=1, and the AP 102 sends service data 1 and service data 2 to the terminal 103, where the service data 1 includes 10 data units, and the service data 2 includes eight data units. The AP 102 initializes an SN of the 1^{st} data unit of the service data 1 to 0. Therefore, SNs of the 10 data units included in the service data 1 are 0, 1, 2, ..., and 9. The AP 102 initializes an SN of the 1^{st} data unit of the service data 2 to 0. Therefore, SNs of the eight data units included in the service data 2 are 0, 1, 2, ..., and 7.

To improve data sending efficiency, a plurality of data units may be aggregated into one downlink service packet, where the plurality of data units belong to a same piece of service data. The AP 102 sends the downlink service packet to the terminal. The terminal 103 includes a receive window corresponding to the service data, and a start position of the receive window is equal to an SN of a last data unit that has been received by the terminal 103 and that belongs to the service data plus 1. After receiving the downlink service packet, the terminal 103 receives the plurality of data units in the downlink service packet by using the receive window. If the terminal 103 successfully receives the plurality of data units by using the receive window, the terminal 103 moves the receive window, so that the start position of the receive window is equal to an SN of a last data unit in the plurality of data units plus 1.

For example, refer to FIG. 3. It is assumed that the service data is the foregoing service data 1. The AP 102 initializes the SN of the 1^{st} data unit of the service data 1 to 0, aggregates the 1^{st} data unit, the 2^{nd} data unit, the 3^{rd} data unit, and the 4^{th} data unit of the service data 1 into one first downlink service packet, and sends the first downlink service packet to the terminal 103. The terminal 103 initializes a start position of a receive window corresponding to the service data 1 to 0. Refer to FIG. 3(a). When receiving the first downlink service packet sent by the AP 102, the terminal 103 receives the 1^{st} data unit, the 2^{nd} data unit, the 3^{rd} data unit, and the 4^{th} data unit in the first downlink service packet by using the receive window. Refer to FIG. 3(b). The terminal 103 moves the receive window, so that the start position of the receive window is equal to an SN of the 4^{th} data unit plus 1; and sends a first acknowledgment message to the AP 102, where the first acknowledgment message indicates that the terminal 103 successfully receives the four data units.

The AP 102 receives the first acknowledgment message, aggregates the 5^{th} data unit, the 6^{th} data unit, the 7^{th} data unit, and the 8^{th} data unit of the service data 1 into one second downlink service packet, and sends the second downlink service packet to the terminal 103. Refer to FIG. 3(c). When receiving the second downlink service packet sent by the AP 102, the terminal 103 receives the 5^{th} data unit, the 6^{th} data unit, the 7^{th} data unit, and the 8^{th} data unit in the second downlink service packet by using the receive window. Refer to FIG. 3(d). The terminal 103 moves the receive window, so that the start position of the receive window is equal to an SN of the 8^{th} data unit plus 1; and sends a second acknowledgment message to the AP 102, where the second acknowledgment message indicates that the terminal 103 successfully receives the four data units.

The AP 102 receives the second acknowledgment message, aggregates the 9^{th} data unit and the 10^{th} data unit of the service data 1 into one third downlink service packet, and sends the third downlink service packet to the terminal 103. Refer to FIG. 3(e). When receiving the third downlink service packet sent by the AP 102, the terminal 103 receives the 9^{th} data unit and the 10^{th} data unit in the third downlink service packet by using the receive window, and sends a third acknowledgment message to the AP 102, where the third acknowledgment message indicates that the terminal 103 successfully receives the two data units.

Likewise, the AP 102 also includes a receive window. For a process in which the AP 102 receives, by using the receive window, the data units sent by the terminal 103, refer to the foregoing process in which the terminal 103 receives, by using the receive window, the data units sent by the AP 102. Details are not described herein again. For ease of description, in the following descriptions, the receive window in the terminal 103 is referred to as a first receive window, and the receive window in the AP 102 is referred to as a second receive window.

In some embodiments, the terminal 103 first accesses one AP 102 when being powered on. For ease of description, the AP 102 is referred to as a first AP. The terminal 103 performs the process of authentication, association, and key agreement with the first AP. When the process is performed, the terminal 103 initializes the initial value of the first anti-replay counter and a start position of a first receive window of a piece of service data, and the first AP initializes initial values of a PN and an SN of the 1^{st} data unit to be sent. Then, the terminal 103 receives, based on the first anti-replay counter and the first receive window, a data unit that is sent by the first AP and that belongs to the service data.

In some embodiments, the terminal 103 accesses a plurality of APs 102 when being powered on. The plurality of APs 102 include a first AP, the first AP is a primary AP, an AP other than the first AP in the plurality of APs 102 is a backup AP, and the terminal communicates with the first AP.

In the Wi-Fi network, the AP that communicates with the terminal 103 may be switched from the first AP to a second AP, where the first AP and the second AP are two different APs. The AP that communicates with the terminal 103 may be switched from the first AP to the second AP in the following two cases. Certainly, the AP that communicates with the terminal 103 may alternatively be switched from the first AP to the second AP in other cases, which are not listed and described one by one herein.

In a first case, the terminal 103 roams in the Wi-Fi network, and the terminal 103 may roam from coverage of the first AP that has been accessed to coverage of the second AP. In this case, the controller 101 may switch the AP accessed by the terminal 103. That is, the controller 101 may switch the AP accessed by the terminal 103 from the first AP to the second AP, so that the AP that communicates with the terminal 103 is switched from the first AP to the second AP.

In a scenario in which the Wi-Fi networking manner is the networking with different BSSIDs, the terminal 103 roams to access the second AP, the terminal 103 performs the process of authentication, association, and key agreement with the second AP, the terminal 103 reinitializes the initial value of the first anti-replay counter and the start position of the first receive window, and the second AP initializes the initial values of the PN and the SN of the 1^{st} data unit to be sent to the terminal 103. The terminal 103 receives, based on the first anti-replay counter and the first receive window, a data unit sent by the second AP. The second AP initializes an initial value of the second anti-replay counter and a start position of the second receive window, and the terminal 103 initializes initial values of a PN and an SN of the 1^{st} data unit to be sent to the second AP. The second AP receives, based on the second anti-replay counter and the second receive window, a data unit sent by the terminal 103.

In a scenario in which the Wi-Fi networking manner is the networking with a same BSSID, the terminal 103 roams to access the second AP, and the terminal 103 does not sense that the AP switching occurs, and does not perform the process of authentication, association, and key agreement with the second AP. As a result, the terminal 103 does not initialize the initial count value of the first anti-replay counter and the start position of the first receive window. However, the second AP initializes initial values of a PN and an SN of the 1^{st} data unit to be sent to the terminal 103. As a result, the count value of the first anti-replay counter is greater than the PN of the 1^{st} data unit, and the start position of the first receive window is greater than the SN of the 1^{st} data unit. As a result, the terminal 103 determines that a data unit sent by the second AP is a repeatedly received data unit, and discards the received data unit. Interruption of transmission of service data in the downlink direction is caused. The second AP may re-initialize an initial value of the second anti-replay counter and a start position of the second receive window. The terminal 103 does not initialize initial values of a PN and an SN of the 1^{st} data unit to be sent to the second AP. The SN of the 1^{st} data unit sent by the terminal 103 to the second AP may exceed an end position of the second receive window in the second AP. The second AP refuses, based on the second receive window, to receive the data unit sent by the terminal 103. Interruption of transmission of service data in an uplink direction is caused.

In a second case, the second AP is a backup AP of the first AP. The AP that communicates with the terminal 103 is switched from the first AP to the second AP in a specified case. Optionally, the controller 101 may switch the AP that communicates with the terminal 103 from the first AP to the second AP in the specified case.

For example, when quality of a communication signal between the terminal 103 and the first AP is poor, the controller 101 switches the AP that communicates with the terminal 103 from the first AP to the second AP. Alternatively, when specified time arrives, the controller 101 switches the AP that communicates with the terminal 103 from the first AP to the second AP. Alternatively, when a quantity of data units that have been sent by the first AP to the terminal 103 reaches a specified quantity threshold, the controller 101 switches the AP that communicates with the terminal 103 from the first AP to the second AP.

Because the terminal 103 has accessed the second AP, when the AP that communicates with the terminal 103 is switched from the first AP to the second AP, the terminal 103 does not perform the process of authentication, association, and key agreement with the second AP. As a result, the terminal 103 does not initialize the initial count value of the first anti-replay counter and the start position of the first receive window. However, the second AP initializes initial values of a PN and an SN of the 1^{st} data unit to be sent to the terminal 103. As a result, the count value of the first anti-replay counter is greater than the PN of the 1^{st} data unit, and the start position of the first receive window is greater than the SN of the 1^{st} data unit. As a result, the terminal 103 determines that a data unit sent by the second AP is a repeatedly received data unit, and discards the received data unit. Interruption of transmission of service data in the downlink direction is caused. The second AP may re-initialize an initial value of the second anti-replay counter and a start position of the second receive window. The terminal 103 does not initialize initial values of a PN and an SN of the 1^{st} data unit to be sent to the second AP. The SN of the 1^{st} data unit sent by the terminal 103 to the second AP may exceed an end position of the second receive window in the second AP. The second AP refuses, based on the second receive window, to receive the data unit sent by the terminal 103. Interruption of transmission of service data in an uplink direction is caused.

In some embodiments, the controller 101 is an access controller (access controller, AC) or the like, and the terminal 103 is a station (station, STA). For example, the terminal 103 is a mobile phone, a tablet computer, and/or a computer. The foregoing data unit is a medium access control protocol data unit (medium access control protocol data unit, MPDU) or the like.

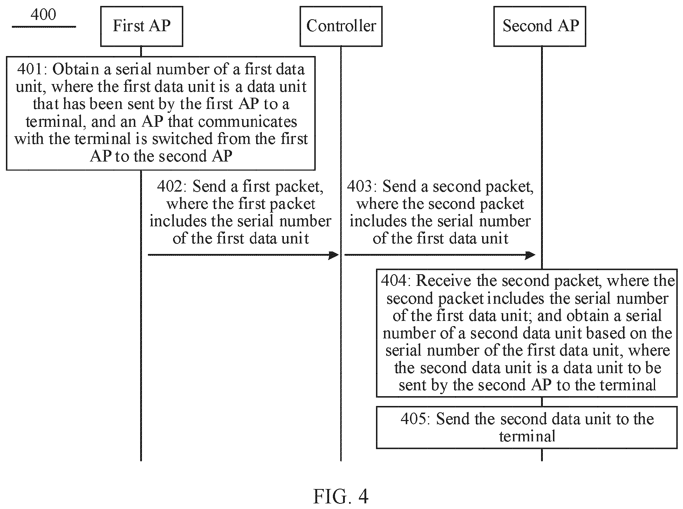

Refer to FIG. 4. An embodiment of this application provides a communication method 400. The method 400 is applied to the network architecture 100 shown in FIG. 1 or FIG. 2. In the method 400, a first AP obtains a serial number of a first data unit that has been sent to a terminal, and sends the serial number of the first data unit. A second AP obtains, based on the serial number of the first data unit, a serial number of a second data unit to be sent to the terminal. The method 400 includes the following operations of step 401 to step 405.

Step 401: The first AP obtains the serial number of the first data unit, where the first data unit is a data unit that has been sent by the first AP to the terminal, and an AP that communicates with the terminal is switched from the first AP to the second AP.

The first AP may obtain the serial number of the first data unit when the AP that communicates with the terminal is switched from the first AP to the second AP. Alternatively, the first AP may obtain the serial number of the first data unit before the AP that communicates with the terminal is switched from the first AP to the second AP.

The first AP and the second AP are two different APs in a Wi-Fi network. In step 401, the following two cases in which the AP that communicates with the terminal is switched from the first AP to the second AP are listed. Certainly, the AP that communicates with the terminal may alternatively be switched from the first AP to the second AP in other cases, which are not listed and described one by one herein.

In a first case, the terminal roams from coverage of the first AP that has been accessed to coverage of the second AP, and a controller switches the first AP accessed by the terminal to the second AP, so that the AP that communicates with the terminal is switched from the first AP to the second AP.

When switching the first AP accessed by the terminal to the second AP, the controller sends a notification message to the first AP. The first AP receives the notification message, and obtains the serial number of the first data unit.

In a second case, the second AP is a backup AP of the first AP. The first AP and the second AP are APs in a subnetwork accessed by the terminal, and the AP that communicates with the terminal is switched from the first AP to the second AP in a specified case.

There may be at least one backup AP of the first AP in the subnetwork, and the second AP is one of the at least one backup AP. The terminal has accessed the subnetwork, and the backup AP in the subnetwork includes identity information of the terminal. When the AP that communicates with the terminal is switched from the first AP to the second AP, the second AP communicates with the terminal based on the identity information that is of the terminal and that is included in the second AP.

In step 401, the first AP obtains the serial number of the first data unit when a current case is the specified case.

In some embodiments, the controller may switch the AP that communicates with the terminal from the first AP to the second AP in the specified case.

Quality of a communication signal between the second AP and the terminal may be the best in quality of a communication signal between the at least one backup AP and the terminal, the second AP may be an AP closest to the terminal in the at least one backup AP, or the second AP may be an AP with least load in the at least one backup AP. Certainly, the second AP may alternatively be an AP in other cases, which are not listed and described one by one herein.

The following lists the following specified case 1, specified case 2, and specified case 3. Certainly, there may alternatively be other specified cases, which are not listed one by one herein.

In the specified case 1, when quality of a communication signal between the terminal and the first AP is poor, the AP that communicates with the terminal is switched from the first AP to the second AP.

In the specified case 1, when the first AP detects that the quality of the communication signal between the first AP and the terminal is lower than a specified signal quality threshold, the serial number of the first data unit is obtained.

When detecting that the quality of the communication signal between the first AP and the terminal is lower than the specified signal quality threshold, the first AP obtains the serial number of the first data unit, and requests the controller to switch the AP that communicates with the terminal. The controller receives the request, and switches the AP that communicates with the terminal to the second AP.

Alternatively, when detecting that the quality of the communication signal between the first AP and the terminal is lower than the specified signal quality threshold, the first AP requests the controller to switch the AP that communicates with the terminal. The controller receives the request, and switches the AP that communicates with the terminal to the second AP. When sensing that the AP that communicates with the terminal is switched to the second AP, the first AP obtains the serial number of the first data unit.

In the specified case 2, when specified time arrives, the controller switches the AP that communicates with the terminal from the first AP to the second AP.

The first AP obtains the serial number of the first data unit when the specified time arrives. Alternatively, when the specified time arrives, the controller switches the AP that communicates with the terminal from the first AP to the second AP. When sensing that the AP that communicates with the terminal is switched, the first AP obtains the serial number of the first data unit.

In the specified case 3, when a quantity of data units that have been sent by the first AP to the terminal reaches a specified quantity threshold, the controller switches the AP that communicates with the terminal from the first AP to the second AP.

When the quantity of data units that have been sent to the terminal reaches the specified quantity threshold, the first AP obtains the serial number of the first data unit, and requests the controller to switch the AP that communicates with the terminal. The controller receives the request, and switches the AP that communicates with the terminal to the second AP.

Alternatively, when the quantity of data units that have been sent to the terminal reaches the specified quantity threshold, the first AP requests the controller to switch the AP that communicates with the terminal. The controller receives the request, and switches the AP that communicates with the terminal to the second AP. When sensing that the AP that communicates with the terminal is switched to the second AP, the first AP obtains the serial number of the first data unit.

In the foregoing specified case 1, specified case 2, or specified case 3, when switching the AP that communicates with the terminal to the second AP, the controller may send the notification message to the first AP. The first AP receives the notification message, and senses, based on the notification message, that the AP that communicates with the terminal is switched to the second AP.

The serial number of the first data unit includes a PN of the first data unit. Alternatively, the serial number of the first data unit includes a PN and an SN of the first data unit.

The first data unit is a data unit that belongs to a second service. When the serial number of the first data unit includes the SN of the first data unit, the first AP may further obtain a service identifier of the second service.

The first AP includes a buffer area. The buffer area is for buffering a data unit that is to be sent to the terminal and that belongs to the second service. The service identifier of the second service may include one or more of the following: a name of the second service, a number of the second service, an identifier of the buffer area, or the like. The identifier of the buffer area may be a traffic identifier (traffic identifier, TID) corresponding to the buffer area.

The first AP may aggregate a plurality of data units into one downlink service packet, and send the downlink service packet to the terminal, where the downlink service packet includes the plurality of data units. The terminal includes a first receive window, and the terminal receives the plurality of data units in the downlink service packet based on the first receive window. In this case, the serial number that is of the first data unit and that is obtained by the first AP may include the PN and the SN of the first data unit, so that the second AP sets a start position of the first receive window based on the SN of the first data unit. Alternatively, the serial number that is of the first data unit and that is obtained by the first AP may include the PN of the first data unit but not include the SN of the first data unit.

The first AP may not perform data unit aggregation, a downlink service packet sent by the first AP to the terminal includes one data unit, and the terminal does not need a first receive window to receive the data unit in the downlink service packet. In this case, the serial number that is of the first data unit and that is obtained by the first AP may include the PN and the SN of the first data unit, or may include the PN of the first data unit but not include the SN of the first data unit.

In some embodiments, the first data unit is a last data unit that has been sent by the first AP to the terminal when the AP that communicates with the terminal is switched from the first AP to the second AP, the first data unit is a previous data unit of the last data unit, or the like.

For example, an example 1 is used below. In the example 1, it is assumed that the first data unit is the last data unit that is sent, the PN of the first data unit is equal to 50, and the SN of the first data unit is equal to 30. After the terminal receives the first data unit, a count value of a first anti-replay counter of the terminal is less than or equal to 50. It is assumed that the value of the first anti-replay counter is 50, and the start position of the first receive window in the terminal is 31. Assuming that a length of the first receive window is 6, an end position of the first receive window is 37.

In some embodiments, after the AP that communicates with the terminal is switched from the first AP to the second AP, the first AP stops sending a data unit to the terminal. That is, after sending the first data unit, the first AP no longer sends the data unit to the terminal. Alternatively, the buffer area of the first AP includes a data unit that has not been sent to the terminal. After the AP that communicates with the terminal is switched from the first AP to the second AP, the first AP may further continue to send the data unit in the buffer area to the terminal. That is, after sending the first data unit, the first AP may further continue to send the data unit in the buffer area to the terminal.

In step 401, the first AP may further obtain a serial number of a third data unit and/or a service identifier of a first service, where the third data unit is a data unit that is sent by the terminal and that is received by the first AP, and the first data unit is a data unit that belongs to the first service.

The serial number of the third data unit includes an SN of the third data unit. Alternatively, the serial number of the third data unit includes a PN and an SN of the third data unit.

In some embodiments, the third data unit may be a last data unit received by the first AP when the AP that communicates with the terminal is switched from the first AP to the second AP, the third data unit is a previous data unit of the last data unit, or the like.

For example, an example 2 is used below. In the example 2, it is assumed that a third data unit is a last data unit that is received, a PN of the third data unit is equal to 7, and an SN of the third data unit is equal to 5. After the terminal sends the third data unit, a PN and an SN of a next data unit to be sent are respectively equal to 8 and 6. For ease of description, the next data unit is referred to as a data unit 1.

In step 401, the first AP may further obtain identification information of a first frequency resource, where the first frequency resource is a frequency resource used by the first AP to send the first data unit to the terminal.

The first frequency resource may include one or more frequencies and the like.

Step 402: The first AP sends a first packet to the controller, where the first packet includes the serial number of the first data unit.

The first packet may further include one or more of the following: the service identifier of the first service, the service identifier of the second service, the identification information of the first frequency resource, or the serial number of the third data unit.

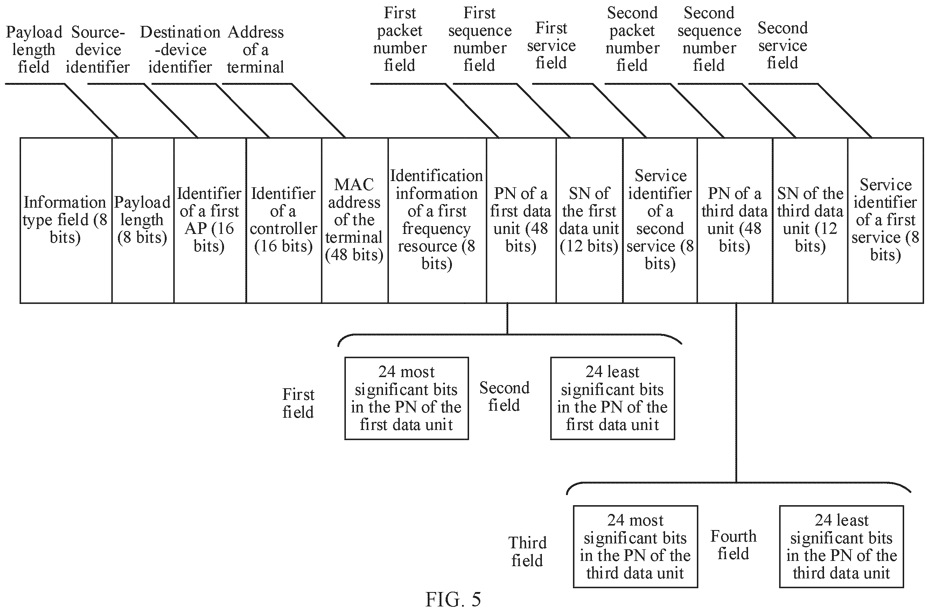

Refer to FIG. 5. The first packet may include a first packet number field, and the first packet number field includes the PN of the first data unit. Optionally, the first packet number field includes a first field and a second field, the first field includes a part of content in the PN of the first data unit, and the second field includes content other than the part of content in the PN of the first data unit. For example, it is assumed that the PN of the first data unit includes 48 bits, the first field includes 24 most significant bits in the PN of the first data unit, and the second field includes 24 least significant bits in the PN of the first data unit.

Refer to FIG. 5. The first packet may further include a first sequence number field and/or a first service field, the first sequence number field includes the SN of the first data unit, and the first service field includes the service identifier of the second service.

Refer to FIG. 5. The first packet may further include a second sequence number field and/or a second service field, the second sequence number field includes the SN of the third data unit, and the second service field includes the service identifier of the first service.

Refer to FIG. 5. The first packet may further include a second packet number field, and the second packet number field includes the PN of the third data unit. Optionally, the second packet number field includes a third field and a fourth field, the third field includes a part of content in the PN of the third data unit, and the fourth field includes content other than the part of content in the PN of the third data unit. For example, it is assumed that the PN of the third data unit includes 48 bits, the third field includes 24 most significant bits in the PN of the third data unit, and the fourth field includes 24 least significant bits in the PN of the third data unit.

A source-device identifier of the first packet is an identifier of the first AP, and a destination-device identifier of the first packet is an identifier of the controller. Optionally, the identifier of the first AP includes an address of the first AP, a sequence number of the first AP, and/or the like, and the identifier of the controller includes an address of the controller, a sequence number of the controller, and/or the like.

Refer to FIG. 5. The first packet may further include an information type field and/or a payload length field, and the information type field indicates information included in the first packet. For example, the information type field indicates that the first packet includes one or more pieces of the following information: the PN of the first data unit, the SN of the first data unit, the PN of the third data unit, the SN of the third data unit, the service identifier of the first service, the service identifier of the second service, the identification information of the first frequency resource, or the like.

A payload of the first packet may include the one or more pieces of information, or a packet header of the first packet may include the one or more pieces of information.

In a Wi-Fi multilink application scenario, the first packet may further include the identification information of the first frequency resource.

In some embodiments, the one or more pieces of information may be carried in a plurality of first packets, and the first AP sends the plurality of first packets to the controller.

Refer to FIG. 5. The first packet may further include the payload length field, and the payload length field includes a payload length of the first packet; and/or the first packet further includes an address of the terminal. For example, the first packet includes a medium access control (medium access control, MAC) address of the terminal.

In some embodiments, the first packet may further include a sending rate of sending a data unit by the first AP, a packet loss rate of a data unit of the first AP, and/or the like.

Lengths of the foregoing fields in the first packet recorded in FIG. 5 are merely an example. The lengths of the fields in the first packet may be set based on an actual requirement. For example, the SN of the first data unit may have a length of 32 bits, and the SN of the third data unit may have a length of 32 bits. In this case, lengths of the first sequence number field and the second sequence number field in the first packet are both 32 bits.

Step 403: The controller receives the first packet, and sends a second packet to the second AP, where the second packet includes the serial number of the first data unit.

In step 403, the controller receives the first packet; replaces the source-device identifier of the first packet with the identifier of the controller, and replaces the destination-device identifier of the first packet with an identifier of the second AP, to obtain the second packet; and sends the second packet to the second AP. Optionally, the identifier of the second AP includes an address of the second AP, a sequence number of the second AP, and/or the like.

When the first AP sends the plurality of first packets, the controller sends a plurality of second packets to the second AP, where the plurality of first packets are in a one-to-one correspondence with the plurality of second packets. For any first packet, a source-device identifier of the first packet is replaced with the identifier of the controller, and a destination-device identifier of the first packet is replaced with the identifier of the second AP, to obtain a second packet corresponding to the first packet.

Step 404: The second AP receives the second packet, where the second packet includes the serial number of the first data unit; and obtains the serial number of the second data unit based on the serial number of the first data unit, where the second data unit is a data unit to be sent by the second AP to the terminal.

In step 404, the second AP obtains a first value, where the first value indicates a quantity of data units sent by the first AP to the terminal after the first AP sends the first data unit; and adds the serial number of the first data unit and the first value, to obtain the serial number of the second data unit.

The first value is an integer greater than 0, and the first value may be an integer such as 1, 10, 20, or 30. The first value may be a specified integer value, or the first value is a value obtained by the second AP based on the sending rate and/or the packet loss rate of the first AP.

When the first packet includes the sending rate of sending the data unit by the first AP and/or the packet loss rate of the data unit of the first AP, the second AP obtains a time length used by the AP that communicates with the terminal to be switched from the first AP to the second AP, and obtains the first value based on the time length and the sending rate, or obtains the first value based on the time length, the sending rate, and the packet loss rate.

In step 404, the serial number of the first data unit includes the PN of the first data unit, the first value includes a PN offset value, a PN of the second data unit is equal to the PN of the first data unit plus ΔPN, and ΔPN is the PN offset value; and/or the serial number of the first data unit includes the SN of the first data unit, the first value includes an SN offset value, an SN of the second data unit is equal to the SN of the first data unit plus ΔSN, and ΔSN is the SN offset value.

For example, in the foregoing example 1, the PN of the first data unit is equal to 50, and the SN of the first data unit is equal to 30. Assuming that ΔPN =1 and ΔSN =1, the PN of the second data unit is equal to 51, and the SN of the second data unit is equal to 31.

In step 404, the second AP further includes a second anti-replay counter, and the second anti-replay counter is configured to count data units that are sent by the terminal and that are successfully received by the second AP. The second AP sets an initial value of the second anti-replay counter to be less than or equal to the PN of the third data unit.

During implementation, when the second packet includes the PN of the third data unit, the second AP sets the initial value of the second anti-replay counter to be less than or equal to the PN of the third data unit. When the second packet does not include the PN of the third data unit, the second AP sets the initial value of the second anti-replay counter to be equal to a small value such as 0, 1, or 2. The small value is usually less than the PN of the third data unit.

In step 404, the second packet includes the SN of the third data unit, the second AP may further obtain a second receive window based on the SN of the third data unit, and the second receive window is for receiving a data unit sent by the terminal to the second AP.

During implementation, the second AP sets a start position of the second receive window to the SN of the third data unit plus 1, and sets a length of the second receive window to a specified length. An end position of the second receive window is equal to a sum of the start position of the second receive window and the specified length.

In this way, when the second AP receives an uplink service packet sent by the terminal, the uplink service packet includes a plurality of data units, a PN of each data unit in the plurality of data units is greater than or equal to a count value of the second anti-replay counter, and the data unit is not a data unit repeatedly received by the second AP. In addition, when an SN of the data unit is greater than or equal to the start position of the second receive window, and is less than or equal to the end position of the second receive window, the plurality of data units are received by using the second receive window. Each time one data unit is received, the value of the second anti-replay counter is increased. After the plurality of data units are received, the second receive window is moved, so that the start position of the second receive window is equal to an SN of a last data unit that is received plus 1. In this way, it is ensured that the second AP can successfully receive the data unit sent by the terminal, and interruption of transmission of uplink service data is avoided.

For example, in the foregoing example 2, the PN and the SN of the third data unit are respectively 7 and 5. It is assumed that the specified length is 6. The second AP sets the initial value of the second anti-replay counter to 2, sets the start position of the second receive window to 6, and sets the length of the second receive window to 6. The end position of the second receive window is 12. When the second AP receives the uplink service packet sent by the terminal, it is assumed that the uplink service packet includes a data unit 1, a data unit 2, and a data unit 3, a PN and an SN of the data unit 1 are respectively 8 and 6, a PN and an SN of the data unit 2 are respectively 9 and 7, and a PN and an SN of the data unit 3 are respectively 10 and 8. The PNs of the three data units are all greater than the count value that is of the second anti-replay counter and that is 2, and the SN of each data unit in the three data units is greater than or equal to the start position that is of the second receive window and that is 6, and is less than or equal to the end position that is of the second receive window and that is 12. The three data units are received by using the second receive window. Each time one data unit is received, 1 is added to the second anti-replay counter. Therefore, after the three data units are received, the count value of the second anti-replay counter is 5. After the three data units are received, the second receive window is further moved, so that the start position of the second receive window is equal to the SN of the data unit 3 plus 1. That is, the start position of the second receive window is equal to 9.

In step 404, the second packet includes the service identifier of the first service, the second AP may further obtain the second receive window based on the SN of the third data unit and the service identifier of the first service, and the second receive window is for receiving a data unit that is sent by the terminal to the second AP and that belongs to the first service.

During implementation, the second AP sets the start position of the second receive window to the SN of the third data unit plus 1, sets the length of the second receive window to the specified length, and associates the first service with the second receive window based on the service identifier of the first service.

In this way, when the second AP receives the uplink service packet sent by the terminal, the uplink service packet includes a plurality of data units that belong to the first service. When an SN of each data unit in the plurality of data units is greater than or equal to the start position of the second receive window, and is less than or equal to the end position of the second receive window, the plurality of data units are received by using the second receive window.

In step 404, the second packet does not include the SN of the third data unit, and the second AP may further negotiate a start position of a second receive window with the terminal.

During implementation, the second AP negotiates with the terminal about an SN of the 1^{st} data unit to be sent by the terminal to the second AP, and sets the start position of the second receive window to the SN of the 1^{st} data unit.

In some embodiments, the terminal may initialize the SN of the 1^{st} data unit to be sent to the second AP to be equal to 0, and the second AP sets the start position of the second receive window to 0. Alternatively, the terminal may send, to the second AP, the SN of the 1^{st} data unit to be sent to the second AP, and the second AP sets the start position of the second receive window to the SN of the 1^{st} data unit.

Step 405: The second AP sends the second data unit to the terminal.

When the first packet includes the identification information of the first frequency resource, the second AP sends the second data unit to the terminal by using the first frequency resource based on the identification information of the first frequency resource.

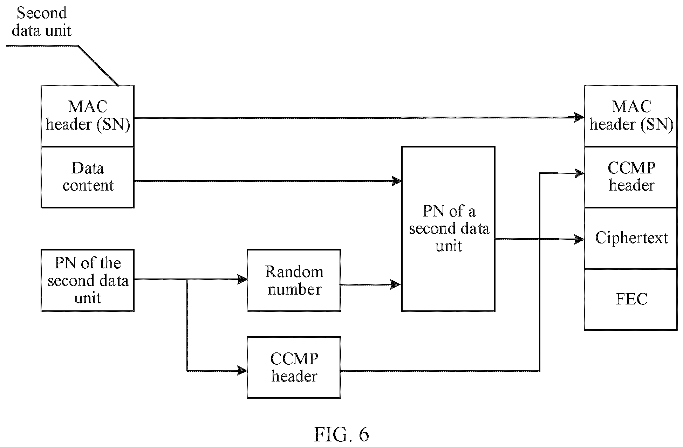

Refer to FIG. 6. Before sending the second data unit, the second AP encrypts the second data unit, where the second data unit includes a MAC header and data content, and the MAC header includes the SN of the second data unit. An encryption process is: generating a random number and a counter mode with cipher block chaining message authentication code protocol (counter mode with cbc-mac protocol, CCMP) header based on the PN of the second data unit, where the CCMP header includes the PN of the second data unit; and encrypting the data content in the second data unit and the random number based on a key, to obtain a ciphertext, where an encrypted second data unit includes the MAC header, the CCMP header, and the ciphertext, and the encrypted second data unit may further include forward error control (forward error control, FEC).

In step 405, the second AP sends a downlink service packet to the terminal, where the downlink service packet includes the encrypted second data unit.

In some embodiments, the downlink service packet may further include one or more data units located after the second data unit.

For example, in the foregoing example 1, the PN of the second data unit is equal to 51, the SN of the second data unit is equal to 31, the count value of the first anti-replay counter of the terminal is 50, and the start position and the end position of the first receive window in the terminal are respectively 31 and 37. It is assumed that the downlink service packet includes the second data unit, a fourth data unit, and a fifth data unit, a serial number of the fourth data unit is obtained by increasing the serial number of the second data unit, and a serial number of the fifth data unit is obtained by increasing the serial number of the fourth data unit. Assuming that an added value is 1, a PN and an SN of the fourth data unit are respectively equal to 52 and 32, and a PN and an SN of the fifth data unit are respectively equal to 53 and 33. The second AP sends the downlink service packet to the terminal, where the second data unit, the fourth data unit, and the fifth data unit included in the downlink service packet are all encrypted data units.

The terminal receives the downlink service packet, and obtains the PN of the second data unit, the PN of the fourth data unit, and the PN of the fifth data unit in the downlink service packet. The PN of the second data unit, the PN of the fourth data unit, and the PN of the fifth data unit are all greater than or equal to the count value that is of the first anti-replay counter of the terminal and that is 50, and the SN of the second data unit, the SN of the fourth data unit, and the SN of the fifth data unit are all greater than or equal to the start position that is of the first receive window in the terminal and that is 31, and are less than or equal to the end position that is of the receive window and that is 37. The terminal receives the second data unit, the fourth data unit, and the fifth data unit, and decrypts the second data unit, the fourth data unit and the fifth data unit, to obtain the data content in the second data unit, data content in the fourth data unit, and data content in the fifth data unit. Each time one data unit is received, the value of the second anti-replay counter is increased. After the three data units are received, the value of the second anti-replay counter is equal to 53, and the first receive window is moved, so that the start position of the first receive window is equal to the SN of the fifth data unit plus 1, that is, is equal to 34. In this way, it is ensured that the terminal can successfully receive the data unit sent by the second AP, and interruption of transmission of downlink service data is avoided.

In this embodiment of this application, the first AP obtains the serial number of the first data unit that has been sent to the terminal, the AP that communicates with the terminal is switched from the first AP to the second AP, and the first AP sends the serial number of the first data unit to the second AP via the controller. The serial number of the first data unit includes the PN and the SN of the first data unit, the value of the first anti-replay counter of the terminal is less than or equal to the PN of the first data unit, and the start position of the receive window in the terminal is obtained based on the SN of the first data unit. The second AP obtains the PN and the SN of the second data unit based on the PN and the SN of the first data unit, and sends the second data unit to the terminal, to ensure that the terminal can successfully receive the second data unit based on the first anti-replay counter and the receive window, and avoid the interruption of the transmission of the downlink service data. The first AP obtains the serial number of the third data unit that is sent by the terminal and that has been received, and sends the serial number of the third data unit to the second AP via the controller. The serial number of the third data unit includes the PN and the SN of the third data unit. A PN of a data unit to be sent by the terminal to the second AP is obtained by increasing the PN of the third data unit, and an SN of the data unit to be sent is obtained by increasing the SN of the third data unit. The second AP sets the value of the second anti-replay counter to be less than or equal to the PN of the third data unit, and sets the start position of the receive window to be equal to the SN of the second data unit, to ensure that the second AP can successfully receive, based on the second anti-replay counter and the receive window, the data unit to be sent, and avoid the interruption of the transmission of the uplink service data.

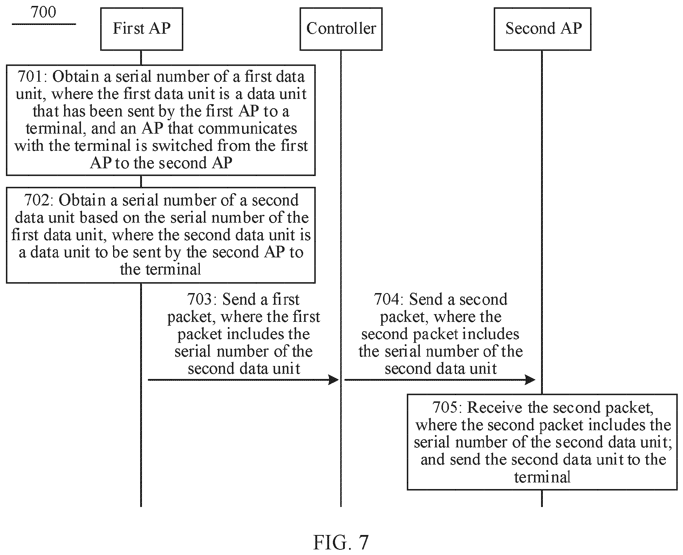

Refer to FIG. 7. An embodiment of this application provides a communication method 700. The method 700 is applied to the network architecture 100 shown in FIG. 1 or FIG. 2. In the method 700, a first AP obtains a serial number of a first data unit that has been sent to a terminal, obtains, based on the serial number of the first data unit, a serial number of a second data unit to be sent by a second AP to the terminal, and sends the serial number of the second data unit. The second AP receives the serial number of the second data unit. The method 700 includes the following operations of step 701 to step 705.

Step 701 is the same as step 401 in the method 400 shown in FIG. 4, and is not described in detail herein again.

Step 702: The first AP obtains the serial number of the second data unit based on the serial number of the first data unit, where the second data unit is a data unit to be sent by the second AP to the terminal.

In step 702, the first AP obtains a first value, where the first value indicates a quantity of data units sent by the first AP to the terminal after the first AP sends the first data unit; and adds the serial number of the first data unit and the first value, to obtain the serial number of the second data unit.

The first value is an integer value greater than 0. The first value may be a specified integer value, or the first value is a value obtained by the second AP based on a sending rate and/or a packet loss rate of the first AP.

The first AP obtains a time length used by an AP that communicates with the terminal to be switched from the first AP to the second AP, and obtains the first value based on the time length and the sending rate, or obtains the first value based on the time length, the sending rate, and the packet loss rate.

The serial number of the first data unit includes a PN of the first data unit, the first value includes a PN offset value, a PN of the second data unit is equal to the PN of the first data unit plus ΔPN, and ΔPN is the PN offset value; and/or the serial number of the first data unit includes an SN of the first data unit, the first value includes an SN offset value, an SN of the second data unit is equal to the SN of the first data unit plus ΔSN, and ΔSN is the SN offset value.

Step 703: The first AP sends a first packet to a controller, where the first packet includes the serial number of the second data unit.

The first packet may further include one or more of the following: a service identifier of a first service, a service identifier of a second service, identification information of a first frequency resource, or a serial number of a third data unit.

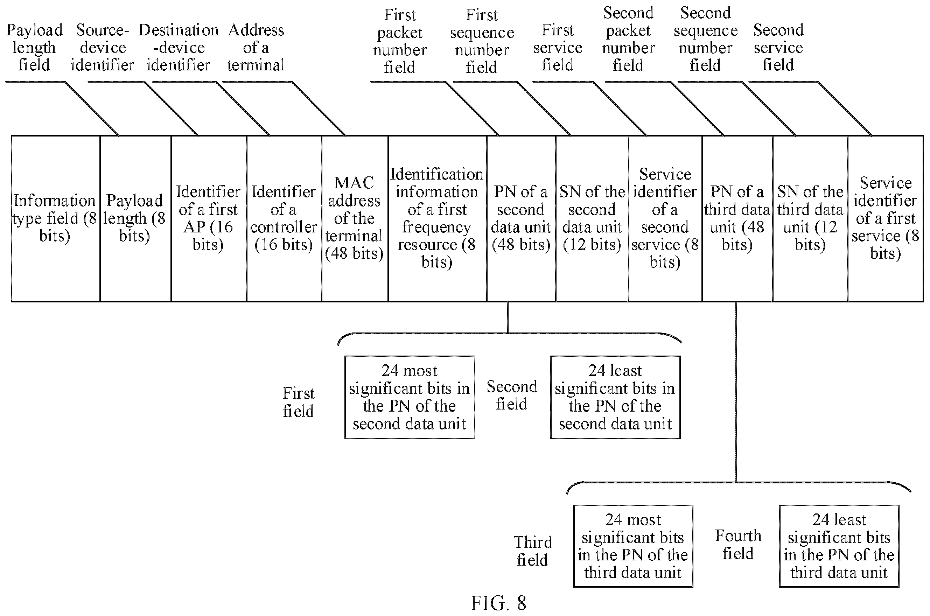

Refer to FIG. 8. The first packet may include a first packet number field, and the first packet number field includes the PN of the second data unit. Optionally, the first packet number field includes a first field and a second field, the first field includes a part of content in the PN of the second data unit, and the second field includes content other than the part of content in the PN of the second data unit.

Refer to FIG. 8. The first packet may further include a first sequence number field and/or a first service field, the first sequence number field includes the SN of the first data unit, and the first service field includes the service identifier of the second service.

Refer to FIG. 8. The first packet may further include a second sequence number field and/or a second service field, the second sequence number field includes an SN of the third data unit, and the second service field includes the service identifier of the first service.

Refer to FIG. 8. The first packet may further include a second packet number field, and the second packet number field includes a PN of the third data unit. Optionally, the second packet number field includes a third field and a fourth field, the third field includes a part of content in the PN of the third data unit, and the fourth field includes content other than the part of content in the PN of the third data unit.

A source-device identifier of the first packet is an identifier of the first AP, and a destination-device identifier of the first packet is an identifier of the controller.

Step 704: The controller receives the first packet, and sends a second packet to the second AP, where the second packet includes the serial number of the second data unit.

In step 704, the controller receives the first packet; replaces the source-device identifier of the first packet with the identifier of the controller, and replaces the destination-device identifier of the first packet with an identifier of the second AP, to obtain the second packet; and sends the second packet to the second AP.

Step 705: The second AP receives the second packet, where the second packet includes the serial number of the second data unit; and sends the second data unit to the terminal.

When the first packet includes the identification information of the first frequency resource, the second AP sends the second data unit to the terminal by using the first frequency resource based on the identification information of the first frequency resource.

Optionally, for a detailed implementation process in which the second AP sends the second data unit to the terminal, refer to related content in step 405 in the method 400 shown in FIG. 4. Details are not described herein again.

In this embodiment of this application, the first AP obtains the serial number of the first data unit that has been sent to the terminal, and the AP that communicates with the terminal is switched from the first AP to the second AP, where the serial number of the first data unit includes the PN and the SN of the first data unit, a value of a first anti-replay counter of the terminal is less than or equal to the PN of the first data unit, and a start position of a receive window in the terminal is obtained based on the SN of the first data unit. The first AP obtains the PN and the SN of the second data unit based on the PN and the SN of the first data unit, and sends the serial number of the second data unit to the second AP via the controller. The second AP receives the PN and the SN of the second data unit, and sends the second data unit to the terminal, to ensure that the terminal can successfully receive the second data unit based on the first anti-replay counter and the receive window, and avoid interruption of transmission of downlink service data. The first AP obtains the serial number of the third data unit that is sent by the terminal and that has been received, and sends the serial number of the third data unit to the second AP via the controller. The serial number of the third data unit includes the PN and the SN of the third data unit. A PN of a data unit to be sent by the terminal to the second AP is obtained by increasing the PN of the third data unit, and an SN of the data unit to be sent is obtained by increasing the SN of the third data unit. The second AP sets a value of a second anti-replay counter to be less than or equal to the PN of the third data unit, and sets a start position of a receive window to be equal to the SN of the second data unit, to ensure that the second AP can successfully receive, based on the second anti-replay counter and the receive window, the data unit to be sent, and avoid interruption of transmission of uplink service data.

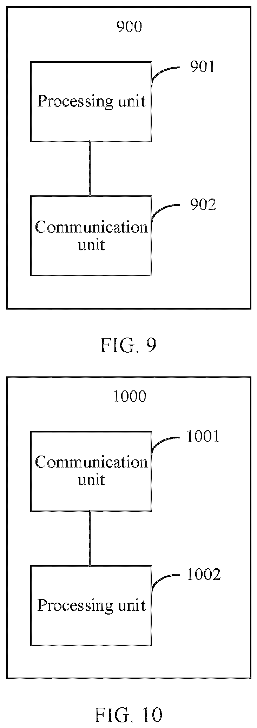

Refer to FIG. 9. An embodiment of this application provides a communication apparatus 900. The apparatus 900 may be deployed on the AP in the network architecture 100 shown in FIG. 1 or FIG. 2, deployed on the first AP in the method 400 shown in FIG. 4, or deployed on the first AP in the method 700 shown in FIG. 7. The apparatus 900 includes:
a processing unit 901, configured to obtain a first serial number based on a serial number of a first data unit, where the first data unit is a data unit that has been sent by the apparatus 900 to a terminal, and an AP that communicates with the terminal is switched from the apparatus 900 to a second AP; and
a communication unit 902, configured to send the first serial number, where the first serial number indicates a serial number of a second data unit, and the second data unit is a data unit to be sent by the second AP to the terminal.

Optionally, for a detailed implementation process in which the processing unit 901 obtains the first serial number, refer to related content in step 401 in the method 400 shown in FIG. 4 or step 702 in the method 700 shown in FIG. 7. Details are not described herein again.

Optionally, for a detailed implementation process in which the communication unit 902 sends the first serial number, refer to related content in step 402 in the method 400 shown in FIG. 4 or step 703 in the method 700 shown in FIG. 7. Details are not described herein again.

Optionally, the first serial number is the serial number of the first data unit, or the first serial number is a sum of the serial number of the first data unit and a first value, where the first value indicates a quantity of data units sent by the apparatus 900 to the terminal after the apparatus 900 sends the first data unit.

Optionally, the communication unit 902 is further configured to send a serial number of a third data unit, where the third data unit is a data unit that is sent by the terminal and that has been received by the apparatus 900, the serial number of the third data unit indicates the second AP to obtain a receive window, and the receive window is for receiving a data unit sent by the terminal.

Optionally, for a detailed implementation process in which the communication unit 902 sends the serial number of the third data unit, refer to related content in step 402 in the method 400 shown in FIG. 4 or step 703 in the method 700 shown in FIG. 7. Details are not described herein again.

Optionally, the third data unit is a data unit that belongs to a first service. The communication unit 902 is further configured to send a service identifier of the first service, where the service identifier of the first service indicates the second AP to obtain the receive window, and the receive window is for receiving a data unit that is sent by the terminal and that belongs to the first service.

Optionally, for a detailed implementation process in which the communication unit 902 sends the service identifier of the first service, refer to related content in step 402 in the method 400 shown in FIG. 4 or step 703 in the method 700 shown in FIG. 7. Details are not described herein again.

Optionally, the communication unit 902 is further configured to send identification information of a first frequency resource, where the first frequency resource is a frequency resource used by the apparatus 900 to send the first data unit, and the identification information of the first frequency resource indicates the second AP to send the second data unit by using the first frequency resource.

Optionally, for a detailed implementation process in which the communication unit 902 sends the identification information of the first frequency resource, refer to related content in step 402 in the method 400 shown in FIG. 4 or step 703 in the method 700 shown in FIG. 7. Details are not described herein again.

Optionally, the serial number of the first data unit includes a packet number PN of the first data unit, and the PN is for numbering a data unit sent to the terminal.

Optionally, the first data unit is a data unit that belongs to a second service, the serial number of the first data unit further includes a sequence number SN of the first data unit, and the SN is for numbering a data unit that belongs to the second service.

Optionally, the communication unit is further configured to send a service identifier of the second service, where the second data unit is a data unit that belongs to the second service.

Optionally, for a detailed implementation process in which the communication unit 902 sends the service identifier of the second service, refer to related content in step 402 in the method 400 shown in FIG. 4 or step 703 in the method 700 shown in FIG. 7. Details are not described herein again.

Optionally, the first serial number includes the serial number of the first data unit.

The communication unit 902 is configured to send a first packet to a controller, where the first packet includes a packet number field and a sequence number field, the packet number field includes the PN of the first data unit, the sequence number field includes the SN of the first data unit, the first packet is for triggering the controller to send a second packet to the second AP, and the second packet includes the packet number field and the sequence number field.

Optionally, for a detailed implementation process in which the communication unit 902 sends the first packet, refer to related content in step 402 in the method 400 shown in FIG. 4 or step 703 in the method 700 shown in FIG. 7. Details are not described herein again.

Optionally, the first data unit is a last data unit that has been sent by the apparatus 900 to the terminal when the AP that communicates with the terminal is switched from the apparatus 900 to the second AP, or the first data unit is a previous data unit of the last data unit.

In this embodiment of this application, the processing unit obtains the serial number of the first data unit that has been sent to the terminal, and obtains the first serial number based on the serial number of the first data unit. The communication unit sends the first serial number, where the AP that communicates with the terminal is switched from the apparatus to the second AP. The second AP obtains the serial number of the second data unit based on the first serial number, where the second data unit is the data unit to be sent by the second AP to the terminal. The first data unit is the first data unit that has been sent by the apparatus to the terminal. A value of an anti-replay counter for receiving a data unit and in the terminal is less than or equal to the serial number of the first data unit, and/or a start position of the receive window for receiving the data unit is obtained based on the serial number of the first data unit. The processing unit obtains the first serial number based on the serial number of the first data unit, and the second AP obtains, based on the first serial number, the serial number of the second data unit to be sent to the terminal, so that the terminal can successfully receive, based on the anti-replay counter and/or the receive window, a data unit sent by the second AP, to avoid interruption of transmission of service data.

Refer to FIG. 10. An embodiment of this application provides a communication apparatus 1000. The apparatus 1000 may be deployed on the AP in the network architecture 100 shown in FIG. 1 or FIG. 2, deployed on the second AP in the method 400 shown in FIG. 4, or deployed on the second AP in the method 700 shown in FIG. 7. The apparatus 1000 includes:
a communication unit 1001, configured to receive a first serial number, where the first serial number is obtained by a first AP based on a serial number of a first data unit, the first data unit is a data unit that has been sent by the first AP to a terminal, and an AP that communicates with the terminal is switched from the first AP to the apparatus 1000; and
a processing unit 1002, configured to obtain a serial number of a second data unit based on the first serial number, where the second data unit is a data unit to be sent by the apparatus 900 to the terminal.

Optionally, for a detailed implementation process in which the communication unit 1001 receives the first serial number, refer to related content in step 404 in the method 400 shown in FIG. 4 or step 705 in the method 700 shown in FIG. 7. Details are not described herein again.

Optionally, for a detailed implementation process in which the processing unit 1002 obtains the serial number of the second data unit, refer to related content in step 404 in the method 400 shown in FIG. 4. Details are not described herein again.

Optionally, the first serial number is the serial number of the first data unit, or the first serial number is a sum of the serial number of the first data unit and a first value, where the first value indicates a quantity of data units sent by the first AP to the terminal after the first AP sends the first data unit.

Optionally, the communication unit 1001 is further configured to receive a serial number of a third data unit, where the third data unit is a data unit that is sent by the terminal and that has been received by the first AP.

The processing unit 1002 is further configured to obtain a receive window based on the serial number of the third data unit, where the receive window is for receiving a data unit sent by the terminal.

Optionally, for a detailed implementation process in which the communication unit 1001 receives the serial number of the third data unit, refer to related content in step 404 in the method 400 shown in FIG. 4 or step 705 in the method 700 shown in FIG. 7. Details are not described herein again.

Optionally, for a detailed implementation process in which the processing unit 1002 obtains the receive window, refer to related content in step 404 in the method 400 shown in FIG. 4 or step 705 in the method 700 shown in FIG. 7. Details are not described herein again.

Optionally, the third data unit is a data unit that belongs to a first service. The communication unit 1001 is further configured to receive a service identifier of the first service.

The processing unit 1002 is configured to obtain the receive window based on the serial number of the third data unit and the service identifier of the first service, where the receive window is for receiving a data unit that is sent by the terminal and that belongs to the first service.

Optionally, for a detailed implementation process in which the communication unit 1001 receives the service identifier of the first service, refer to related content in step 404 in the method 400 shown in FIG. 4 or step 705 in the method 700 shown in FIG. 7. Details are not described herein again.

Optionally, for a detailed implementation process in which the processing unit 1002 obtains the receive window, refer to related content in step 404 in the method 400 shown in FIG. 4 or step 705 in the method 700 shown in FIG. 7. Details are not described herein again.

Optionally, the apparatus 1000 includes an anti-replay counter. The anti-replay counter is configured to record a quantity of successfully received data units sent by the terminal. The processing unit 1002 is further configured to set an initial value of the anti-replay counter to be less than or equal to the serial number of the third data unit.

Optionally, for a detailed implementation process in which the processing unit 1002 sets the initial value of the anti-replay counter, refer to related content in step 404 in the method 400 shown in FIG. 4 or step 705 in the method 700 shown in FIG. 7. Details are not described herein again.

Optionally, the communication unit 1001 is configured to receive identification information of a first frequency resource, where the first frequency resource is a frequency resource used by the first AP to send the first data unit.

The communication unit 1001 is further configured to send the second data unit to the terminal by using the first frequency resource based on the identification information.

Optionally, for a detailed implementation process in which the communication unit 1001 receives the identification information of the first frequency resource, refer to related content in step 404 in the method 400 shown in FIG. 4 or step 705 in the method 700 shown in FIG. 7. Details are not described herein again.

Optionally, for a detailed implementation process in which the communication unit 1001 sends the second data unit, refer to related content in step 405 in the method 400 shown in FIG. 4 or step 705 in the method 700 shown in FIG. 7. Details are not described herein again.

Optionally, the serial number of the first data unit includes a packet number PN of the first data unit, and the PN is for numbering a data unit sent to the terminal.

Optionally, the first data unit is a data unit that belongs to a second service, the serial number of the first data unit further includes a sequence number SN of the first data unit, and the SN is for numbering a data unit that belongs to the second service.

Optionally, the communication unit 1001 is further configured to receive a service identifier of the second service, where the second data unit is a data unit that belongs to the second service.

Optionally, for a detailed implementation process in which the communication unit 1001 receives the service identifier of the second service, refer to related content in step 404 in the method 400 shown in FIG. 4 or step 705 in the method 700 shown in FIG. 7. Details are not described herein again.

Optionally, the first serial number includes the serial number of the first data unit. The communication unit 1001 is configured to receive a second packet sent by a controller, where the second packet includes a packet number field and a sequence number field, the packet number field includes the PN of the first data unit, the sequence number field includes the SN of the first data unit, the second packet is sent by the controller based on a received first packet from the first AP, and the first packet includes the packet number field and the sequence number field.

Optionally, for a detailed implementation process in which the communication unit 1001 receives the second packet, refer to related content in step 404 in the method 400 shown in FIG. 4 or step 705 in the method 700 shown in FIG. 7. Details are not described herein again.

Optionally, the first data unit is a last data unit that has been sent by the first AP to the terminal when the AP that communicates with the terminal is switched from the first AP to the apparatus, or the first data unit is a previous data unit of the last data unit.

In this embodiment of this application, the communication unit receives the first serial number, where the first serial number is obtained by the first AP based on the serial number of the first data unit, the first data unit is the data unit that has been sent by the first AP to the terminal, and the AP that communicates with the terminal is switched from the first AP to the apparatus. The processing unit obtains the serial number of the second data unit based on the first serial number, where the second data unit is the data unit to be sent by the apparatus to the terminal. The first data unit is the first data unit that has been sent by the first AP to the terminal. A value of the anti-replay counter for receiving a data unit and in the terminal is less than or equal to the serial number of the first data unit, and/or a start position of the receive window for receiving the data unit is obtained based on the serial number of the first data unit. The first serial number is obtained based on the serial number of the first data unit, and the processing unit obtains, based on the first serial number, the serial number of the second data unit to be sent to the terminal, so that the terminal can successfully receive, based on the anti-replay counter and/or the receive window, a data unit sent by the communication unit, to avoid interruption of transmission of service data.

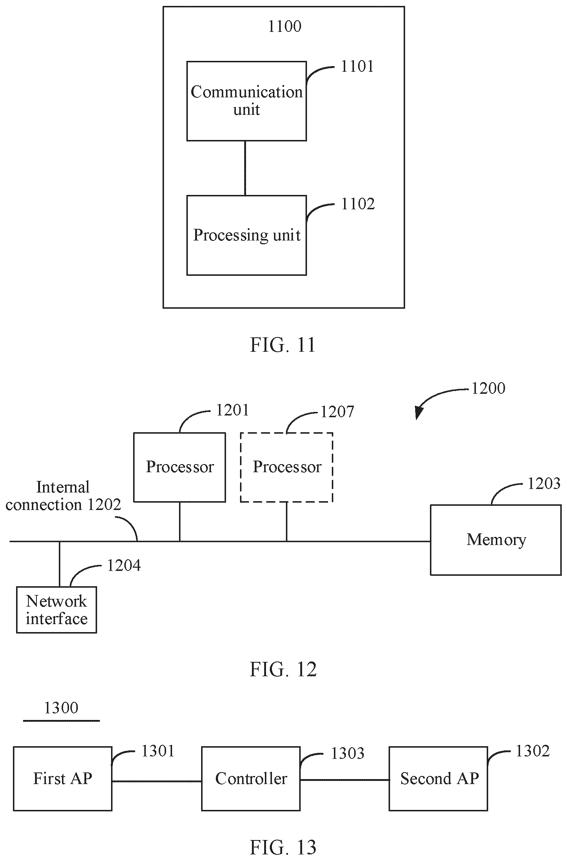

Refer to FIG. 11. An embodiment of this application provides a communication apparatus 1100. The apparatus 1100 may be deployed on the controller in the network architecture 100 shown in FIG. 1 or FIG. 2, deployed on the controller in the method 400 shown in FIG. 4, or deployed on the controller in the method 700 shown in FIG. 7. The apparatus 1100 includes:
a communication unit 1101, configured to receive a first serial number sent by a first access point AP, where the first serial number is obtained by the first AP based on a serial number of a first data unit, the first data unit is a data unit that has been sent by the first AP to a terminal, and an AP that communicates with the terminal is switched from the first AP to a second AP.

The communication unit 1101 is further configured to send the first serial number to the second AP, where the first serial number indicates a serial number of a second data unit, and the second data unit is a data unit to be sent by the second AP to the terminal.

Optionally, for a detailed implementation process in which the communication unit 1101 receives the first serial number, refer to related content in step 403 in the method 400 shown in FIG. 4 or step 704 in the method 700 shown in FIG. 7. Details are not described herein again.

Optionally, for a detailed implementation process in which the communication unit 1101 sends the first serial number, refer to related content in step 403 in the method 400 shown in FIG. 4 or step 704 in the method 700 shown in FIG. 7. Details are not described herein again.

Optionally, the first serial number is the serial number of the first data unit, or the first serial number is a sum of the serial number of the first data unit and a first value, where the first value indicates a quantity of data units sent by the first AP to the terminal after the first AP sends the first data unit.

Optionally, the communication unit 1101 is further configured to receive a serial number that is of a third data unit and that is sent by the first AP, where the third data unit is a data unit that is sent by the terminal and that has been received by the first AP.

The communication unit 1101 is further configured to send the serial number of the third data unit to the second AP, where the serial number of the third data unit indicates the second AP to obtain a receive window, and the receive window is for receiving a data unit sent by the terminal.

Optionally, for a detailed implementation process in which the communication unit 1101 receives the serial number of the third data unit, refer to related content in step 403 in the method 400 shown in FIG. 4 or step 704 in the method 700 shown in FIG. 7. Details are not described herein again.

Optionally, for a detailed implementation process in which the communication unit 1101 sends the serial number of the third data unit, refer to related content in step 403 in the method 400 shown in FIG. 4 or step 704 in the method 700 shown in FIG. 7. Details are not described herein again.

Optionally, the third data unit is a data unit that belongs to a first service. The communication unit 1101 is further configured to receive a service identifier that is of the first service and that is sent by the first AP.

The communication unit 1101 is further configured to send the service identifier of the first service to the second AP, where the service identifier of the first service indicates the second AP to obtain the receive window, and the receive window is for receiving a data unit that is sent by the terminal and that belongs to the first service.

Optionally, for a detailed implementation process in which the communication unit 1101 receives the service identifier of the first service, refer to related content in step 403 in the method 400 shown in FIG. 4 or step 704 in the method 700 shown in FIG. 7. Details are not described herein again.

Optionally, for a detailed implementation process in which the communication unit 1101 sends the service identifier of the first service, refer to related content in step 403 in the method 400 shown in FIG. 4 or step 704 in the method 700 shown in FIG. 7. Details are not described herein again.

Optionally, the communication unit 1101 is further configured to receive identification information that is of a first frequency resource and that is sent by the first AP, where the first frequency resource is a frequency resource used by the first AP to send the first data unit.

The communication unit 1101 is further configured to send the identification information of the first frequency resource to the second AP, where the identification information of the first frequency resource indicates the second AP to send the second data unit by using the first frequency resource.

Optionally, for a detailed implementation process in which the communication unit 1101 receives the identification information of the first frequency resource, refer to related content in step 403 in the method 400 shown in FIG. 4 or step 704 in the method 700 shown in FIG. 7. Details are not described herein again.

Optionally, for a detailed implementation process in which the communication unit 1101 sends the identification information of the first frequency resource, refer to related content in step 403 in the method 400 shown in FIG. 4 or step 704 in the method 700 shown in FIG. 7. Details are not described herein again.

Optionally, the serial number of the first data unit includes a packet number PN of the first data unit, and the PN is for numbering a data unit sent to the terminal.

Optionally, the first data unit is a data unit that belongs to a second service, the serial number of the first data unit further includes a sequence number SN of the first data unit, and the SN is for numbering a data unit that belongs to the second service.

Optionally, the communication unit 1101 is configured to receive a service identifier that is of the second service and that is sent by the first AP.

The communication unit 1101 is configured to send the service identifier of the second service to the second AP, where the second data unit is a data unit that belongs to the second service.

Optionally, for a detailed implementation process in which the communication unit 1101 receives the service identifier of the second service, refer to related content in step 403 in the method 400 shown in FIG. 4 or step 704 in the method 700 shown in FIG. 7. Details are not described herein again.

Optionally, for a detailed implementation process in which the communication unit 1101 sends the service identifier of the second service, refer to related content in step 403 in the method 400 shown in FIG. 4 or step 704 in the method 700 shown in FIG. 7. Details are not described herein again.

Optionally, the first serial number includes the serial number of the first data unit. The communication unit 1101 is configured to receive a first packet sent by the first AP, where the first packet includes a packet number field and a sequence number field, the packet number field includes the PN of the first data unit, and the sequence number field includes the SN of the first data unit.

The communication unit 1101 is configured to send a second packet to the second AP, where the second packet includes the packet number field and the sequence number field.

Optionally, the apparatus 1100 further includes a processing unit 1102. The second packet is obtained by the processing unit 1102 based on the first packet.

Optionally, for a detailed implementation process in which the communication unit 1101 receives the first packet, refer to related content in step 403 in the method 400 shown in FIG. 4 or step 704 in the method 700 shown in FIG. 7. Details are not described herein again.

Optionally, for a detailed implementation process in which the communication unit 1101 sends the second packet, refer to related content in step 403 in the method 400 shown in FIG. 4 or step 704 in the method 700 shown in FIG. 7. Details are not described herein again.

Optionally, the first data unit is a last data unit that has been sent by the first AP to the terminal when the AP that communicates with the terminal is switched from the first AP to the second AP, or the first data unit is a previous data unit of the last data unit.

In this embodiment of this application, the communication unit receives the first serial number sent by the first access point AP, where the first serial number is obtained by the first AP based on the serial number of the first data unit, the first data unit is the data unit that has been sent by the first AP to the terminal, and the AP that communicates with the terminal is switched from the first AP to the second AP; and sends the first serial number to the second AP, where the first serial number indicates the serial number of the second data unit, and the second data unit is the data unit to be sent by the second AP to the terminal. The first data unit is the first data unit that has been sent by the first AP to the terminal, and the first serial number is obtained based on the serial number of the first data unit. A value of an anti-replay counter for receiving a data unit and in the terminal is less than or equal to the serial number of the first data unit, and/or a start position of the receive window for receiving the data unit is obtained based on the serial number of the first data unit. The communication unit receives the first serial number, and sends the first serial number to the second AP, and the second AP obtains, based on the first serial number, the serial number of the second data unit to be sent to the terminal, so that the terminal can successfully receive, based on the anti-replay counter and/or the receive window, a data unit sent by the second AP, to avoid interruption of transmission of service data.

Refer to FIG. 12. An embodiment of this application provides a schematic diagram of a device 1200. The device 1200 may be the first AP, the second AP, or the controller provided in any of the foregoing embodiments. For example, the device 1200 may be the AP or the controller in the network architecture 100 shown in FIG. 1 or FIG. 2, the device 1200 may be the first AP, the second AP, or the controller in the method 400 shown in FIG. 4, or the device 1200 may be the first AP, the second AP, or the controller in the method 700 shown in FIG. 7. The device 1200 includes at least one processor 1201, an internal connection 1202, a memory 1203, and at least one communication interface 1204.

The device 1200 is an apparatus of a hardware structure.

In some embodiments, the device 1200 may be configured to implement the functional modules in the apparatus 900 in FIG. 9. For example, a person skilled in the art may figure out that the processing unit 901 in the apparatus 900 shown in FIG. 9 may be implemented by the at least one processor 1201 by invoking code in the memory 1203. The communication unit 902 in the apparatus 900 shown in FIG. 9 may be implemented by using the at least one communication interface 1204. The device 1200 may be further configured to implement a function of the first AP in any one of the foregoing embodiments.

In some embodiments, the device 1200 may be configured to implement the functional modules in the apparatus 1000 in FIG. 10. For example, a person skilled in the art may figure out that the processing unit 1002 in the apparatus 1000 shown in FIG. 10 may be implemented by the at least one processor 1201 by invoking code in the memory 1203. The communication unit 1001 in the apparatus 1000 shown in FIG. 10 may be implemented by using the at least one communication interface 1204. The device 1200 may be further configured to implement a function of the second AP in any one of the foregoing embodiments.

In some embodiments, the device 1200 may be configured to implement the functional modules in the apparatus 1100 in FIG. 11. For example, a person skilled in the art may figure out that the processing unit 1102 in the apparatus 1100 shown in FIG. 11 may be implemented by the at least one processor 1201 by invoking code in the memory 1203. The communication unit 1101 in the apparatus 1100 shown in FIG. 11 may be implemented by using the at least one communication interface 1204. The device 1200 may be further configured to implement a function of the controller in any one of the foregoing embodiments.

The processor 1201 is, for example, a general-purpose central processing unit (Central Processing Unit, CPU), a digital signal processor (Digital Signal Processor, DSP), a network processor (Network Processor, NP), a graphics processing unit (Graphics Processing Unit, GPU), a neural-network processing unit (Neural-network Processing Unit, NPU), a data processing unit (Data Processing Unit, DPU), a microprocessor, or one or more integrated circuits configured to implement the solutions in this application. For example, the processor 1201 includes an application-specific integrated circuit (Application-specific Integrated Circuit, ASIC), a programmable logic device (Programmable Logic Device, PLD) or another programmable logic device, a transistor logic device, a hardware component, or any combination thereof. The PLD may be, for example, a complex programmable logic device (Complex Programmable Logic Device, CPLD), a field-programmable gate array (Field-programmable Gate Array, FPGA), generic array logic (Generic Array Logic, GAL), or any combination thereof. The processor 1201 may implement or execute various logical blocks, modules, and circuits described with reference to content disclosed in embodiments of this application. The processor may alternatively be a combination of processors implementing a computing function, for example, a combination of one or more microprocessors or a combination of the DSP and a microprocessor.

The internal connection 1202 may include a path for transferring information between the foregoing components. The internal connection 1202 may be a board, a bus, or the like. The bus may be a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. For ease of representation, only one bold line indicates the bus in FIG. 12, but this does not mean that there is only one bus or only one type of bus.

The at least one communication interface 1204 is any transceiver-type apparatus, and is configured to communicate with another device or a communication network. The communication network may be an ethernet, a radio access network, a wireless local area network (Wireless Local Area Network, WLAN), or the like. The communication interface 1204 may include a wired communication interface, and may further include a wireless communication interface. Specifically, the communication interface 1204 may be an ethernet interface, a fast ethernet (Fast Ethernet, FE) interface, a gigabit ethernet (Gigabit Ethernet, GE) interface, an asynchronous transfer mode (Asynchronous Transfer Mode, ATM) interface, a wireless local area network WLAN interface, a cellular network communication interface, or a combination thereof. The ethernet interface may be an optical interface, an electrical interface, or a combination thereof. In this embodiment of this application, the communication interface 1204 may be used by the device 1200 to communicate with the another device.

The memory 1203 may be a read-only memory (read-only memory, ROM) or another type of static storage device capable of storing static information and instructions, a random access memory (random access memory, RAM) or another type of dynamic storage device capable of storing information and instructions, an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, and the like), a magnetic disk storage medium or another magnetic storage device, or any other medium capable of carrying or storing expected program code in a form of instructions or a data structure and capable of being accessed by a computer, but is not limited thereto. The memory may exist independently, and is connected to the processor through the bus. The memory 1203 may alternatively be integrated with the processor 1201.

During specific implementation, in an embodiment, the processor 1201 may include one or more CPUs such as a CPU 0 and a CPU 1 in FIG. 12. Each of the CPUs may be a single-core processor, or may be a multi-core processor. The processor herein may refer to one or more devices, circuits, and/or processing cores configured to process data (for example, computer program instructions).

During specific implementation, in an embodiment, the device 1200 may include a plurality of processors, for example, the processor 1201 and a processor 1207 in FIG. 12. Each of the processors may be a single-core (single-CPU) processor, or may be a multi-core (multi-CPU) processor. The processor herein may refer to one or more devices, circuits, and/or processing cores configured to process data (for example, computer program instructions).

Refer to FIG. 13. An embodiment of this application further provides a communication system 1300. The system includes the apparatus 900 shown in FIG. 9, the apparatus 1000 shown in FIG. 10, and the apparatus 1100 shown in FIG. 11. The apparatus shown in FIG. 9 may be a first AP 1301, the apparatus shown in FIG. 10 may be a second AP 1302, and the apparatus 1100 shown in FIG. 11 may be a controller 1303.

This application is applied to a wireless local area network system that supports 802.11 series protocols such as IEEE 802.11ax next-generation Wi-Fi protocols, for example, 802.11be, Wi-Fi 7, or extremely high throughput (extremely high throughput, EHT), and for example, 802.11be next-generation, Wi-Fi 8, Wi-Fi AI, and ultra high reliability (ultra high reliability, UHR).

A person of ordinary skill in the art may understand that all or some of the steps of the foregoing embodiments may be implemented by hardware or by a program instructing related hardware. The program may be stored in a computer-readable storage medium. The foregoing storage medium may be a read-only memory, a magnetic disk, an optical disc, or the like.

The foregoing descriptions are only optional embodiments of this application, but are not intended to limit this application. Any modification, equivalent replacement, improvement, or the like made within the principle of this application should fall within the protection scope of this application.

## Claims

1. A communication method, wherein the method comprises:
obtaining, by a first access point AP, a first serial number based on a serial number of a first data unit, wherein the first data unit is a data unit that has been sent by the first AP to a terminal, and an AP that communicates with the terminal is switched from the first AP to a second AP;
sending, by the first AP, the first serial number; and
obtaining, by the second AP, a serial number of a second data unit based on the first serial number, wherein the second data unit is a data unit to be sent by the second AP to the terminal.

2. The method according to claim 1, wherein the first serial number is the serial number of the first data unit, or the first serial number is a sum of the serial number of the first data unit and a first value, wherein the first value indicates a quantity of data units sent by the first AP to the terminal after the first AP sends the first data unit.

3. The method according to claim 1 or 2, wherein the method further comprises:
sending, by the first AP, a serial number of a third data unit, wherein the third data unit is a data unit that is sent by the terminal and that has been received by the first AP; and
obtaining, by the second AP, a receive window based on the serial number of the third data unit, wherein the receive window is for receiving a data unit sent by the terminal.

4. The method according to claim 3, wherein the third data unit is a data unit that belongs to a first service, and the method further comprises:
sending, by the first AP, a service identifier of the first service; and
the obtaining, by the second AP, a receive window based on the serial number of the third data unit comprises:
obtaining, by the second AP, the receive window based on the serial number of the third data unit and the service identifier of the first service, wherein the receive window is for receiving a data unit that is sent by the terminal and that belongs to the first service.

5. The method according to any one of claims 1 to 4, wherein the method further comprises:
sending, by the first AP, identification information of a first frequency resource, wherein the first frequency resource is a frequency resource used by the first AP to send the first data unit; and
sending, by the second AP, the second data unit by using the first frequency resource based on the identification information.

6. The method according to any one of claims 1 to 5, wherein the serial number of the first data unit comprises a packet number PN of the first data unit, and the PN is for numbering a data unit sent to the terminal.

7. The method according to claim 6, wherein the first data unit is a data unit that belongs to a second service, the serial number of the first data unit further comprises a sequence number SN of the first data unit, and the SN is for numbering a data unit that belongs to the second service.

8. The method according to claim 7, wherein the method further comprises:
sending, by the first AP, a service identifier of the second service, wherein the second data unit is a data unit that belongs to the second service.

9. The method according to claim 7 or 8, wherein the first serial number comprises the serial number of the first data unit, and the sending, by the first AP, the first serial number comprises:
sending, by the first AP, a first packet to a controller, wherein the first packet comprises a packet number field and a sequence number field, the packet number field comprises the PN of the first data unit, and the sequence number field comprises the SN of the first data unit; and
sending, by the controller, a second packet to the second AP, wherein the second packet comprises the packet number field and the sequence number field.

10. The method according to any one of claims 1 to 9, wherein the first data unit is a last data unit that has been sent by the first AP to the terminal when the AP that communicates with the terminal is switched from the first AP to the second AP, or the first data unit is a previous data unit of the last data unit.

11. A communication method, wherein the method comprises:
obtaining, by a first access point AP, a first serial number based on a serial number of a first data unit, wherein the first data unit is a data unit that has been sent by the first AP to a terminal, and an AP that communicates with the terminal is switched from the first AP to a second AP; and
sending, by the first AP, the first serial number, wherein the first serial number indicates a serial number of a second data unit, and the second data unit is a data unit to be sent by the second AP to the terminal.

12. The method according to claim 11, wherein the first serial number is the serial number of the first data unit, or the first serial number is a sum of the serial number of the first data unit and a first value, wherein the first value indicates a quantity of data units sent by the first AP to the terminal after the first AP sends the first data unit.

13. The method according to claim 11 or 12, wherein the method further comprises:
sending, by the first AP, a serial number of a third data unit, wherein the third data unit is a data unit that is sent by the terminal and that has been received by the first AP, the serial number of the third data unit indicates the second AP to obtain a receive window, and the receive window is for receiving a data unit sent by the terminal.

14. The method according to claim 13, wherein the third data unit is a data unit that belongs to a first service, and the method further comprises:
sending, by the first AP, a service identifier of the first service, wherein the service identifier of the first service indicates the second AP to obtain the receive window, and the receive window is for receiving a data unit that is sent by the terminal and that belongs to the first service.

15. The method according to any one of claims 11 to 14, wherein the method further comprises:
sending, by the first AP, identification information of a first frequency resource, wherein the first frequency resource is a frequency resource used by the first AP to send the first data unit, and the identification information of the first frequency resource indicates the second AP to send the second data unit by using the first frequency resource.

16. The method according to any one of claims 11 to 15, wherein the serial number of the first data unit comprises a packet number PN of the first data unit, and the PN is for numbering a data unit sent to the terminal.

17. The method according to claim 16, wherein the first data unit is a data unit that belongs to a second service, the serial number of the first data unit further comprises a sequence number SN of the first data unit, and the SN is for numbering a data unit that belongs to the second service.

18. The method according to claim 17, wherein the method further comprises:
sending, by the first AP, a service identifier of the second service, wherein the second data unit is a data unit that belongs to the second service.

19. The method according to claim 17 or 18, wherein the first serial number comprises the serial number of the first data unit, and the sending, by the first AP, the first serial number comprises:
sending, by the first AP, a first packet to a controller, wherein the first packet comprises a packet number field and a sequence number field, the packet number field comprises the PN of the first data unit, the sequence number field comprises the SN of the first data unit, the first packet is for triggering the controller to send a second packet to the second AP, and the second packet comprises the packet number field and the sequence number field.

20. The method according to any one of claims 11 to 19, wherein the first data unit is a last data unit that has been sent by the first AP to the terminal when the AP that communicates with the terminal is switched from the first AP to the second AP, or the first data unit is a previous data unit of the last data unit.

21. A communication method, wherein the method comprises:
receiving, by a second access point AP, a first serial number, wherein the first serial number is obtained by a first AP based on a serial number of a first data unit, the first data unit is a data unit that has been sent by the first AP to a terminal, and an AP that communicates with the terminal is switched from the first AP to the second AP; and
obtaining, by the second AP, a serial number of a second data unit based on the first serial number, wherein the second data unit is a data unit to be sent by the second AP to the terminal.

22. The method according to claim 21, wherein the first serial number is the serial number of the first data unit, or the first serial number is a sum of the serial number of the first data unit and a first value, wherein the first value indicates a quantity of data units sent by the first AP to the terminal after the first AP sends the first data unit.

23. The method according to claim 21 or 22, wherein the method further comprises:
receiving, by the second AP, a serial number of a third data unit, wherein the third data unit is a data unit that is sent by the terminal and that has been received by the first AP; and
obtaining, by the second AP, a receive window based on the serial number of the third data unit, wherein the receive window is for receiving a data unit sent by the terminal.

24. The method according to claim 23, wherein the third data unit is a data unit that belongs to a first service, and the method further comprises:
receiving, by the second AP, a service identifier of the first service; and
the obtaining, by the second AP, a receive window based on the serial number of the third data unit comprises:
obtaining, by the second AP, the receive window based on the serial number of the third data unit and the service identifier of the first service, wherein the receive window is for receiving a data unit that is sent by the terminal and that belongs to the first service.

25. The method according to claim 23 or 24, wherein the second AP comprises an anti-replay counter, the anti-replay counter is configured to record a quantity of successfully received data units sent by the terminal, and the method further comprises:
setting, by the second AP, an initial value of the anti-replay counter to be less than or equal to the serial number of the third data unit.

26. The method according to any one of claims 21 to 25, wherein the method further comprises:
receiving, by the second AP, identification information of a first frequency resource, wherein the first frequency resource is a frequency resource used by the first AP to send the first data unit; and
sending, by the second AP, the second data unit to the terminal by using the first frequency resource based on the identification information.

27. The method according to any one of claims 21 to 26, wherein the serial number of the first data unit comprises a packet number PN of the first data unit, and the PN is for numbering a data unit sent to the terminal.

28. The method according to claim 27, wherein the first data unit is a data unit that belongs to a second service, the serial number of the first data unit further comprises a sequence number SN of the first data unit, and the SN is for numbering a data unit that belongs to the second service.

29. The method according to claim 28, wherein the method further comprises:
receiving, by the second AP, a service identifier of the second service, wherein the second data unit is a data unit that belongs to the second service.

30. The method according to claim 28 or 29, wherein the first serial number comprises the serial number of the first data unit, and the receiving, by a second access point AP, a first serial number comprises:
receiving, by the second AP, a second packet sent by a controller, wherein the second packet comprises a packet number field and a sequence number field, the packet number field comprises the PN of the first data unit, the sequence number field comprises the SN of the first data unit, the second packet is sent by the controller based on a received first packet from the first AP, and the first packet comprises the packet number field and the sequence number field.

31. The method according to any one of claims 21 to 30, wherein the first data unit is a last data unit that has been sent by the first AP to the terminal when the AP that communicates with the terminal is switched from the first AP to the second AP, or the first data unit is a previous data unit of the last data unit.

32. A communication method, wherein the method comprises:
receiving, by a controller, a first serial number sent by a first access point AP, wherein the first serial number is obtained by the first AP based on a serial number of a first data unit, the first data unit is a data unit that has been sent by the first AP to a terminal, and an AP that communicates with the terminal is switched from the first AP to a second AP; and
sending, by the controller, the first serial number to the second AP, wherein the first serial number indicates a serial number of a second data unit, and the second data unit is a data unit to be sent by the second AP to the terminal.

33. The method according to claim 32, wherein the first serial number is the serial number of the first data unit, or the first serial number is a sum of the serial number of the first data unit and a first value, wherein the first value indicates a quantity of data units sent by the first AP to the terminal after the first AP sends the first data unit.

34. The method according to claim 32 or 33, wherein the method further comprises:
receiving, by the controller, a serial number that is of a third data unit and that is sent by the first AP, wherein the third data unit is a data unit that is sent by the terminal and that has been received by the first AP; and
sending, by the controller, the serial number of the third data unit to the second AP, wherein the serial number of the third data unit indicates the second AP to obtain a receive window, and the receive window is for receiving a data unit sent by the terminal.

35. The method according to claim 34, wherein the third data unit is a data unit that belongs to a first service, and the method further comprises:
receiving, by the controller, a service identifier that is of the first service and that is sent by the first AP; and
sending, by the controller, the service identifier of the first service to the second AP, wherein the service identifier of the first service indicates the second AP to obtain the receive window, and the receive window is for receiving a data unit that is sent by the terminal and that belongs to the first service.

36. The method according to any one of claims 32 to 35, wherein the method further comprises:
receiving, by the controller, identification information that is of a first frequency resource and that is sent by the first AP, wherein the first frequency resource is a frequency resource used by the first AP to send the first data unit; and
sending, by the controller, the identification information of the first frequency resource to the second AP, wherein the identification information of the first frequency resource indicates the second AP to send the second data unit by using the first frequency resource.

37. The method according to any one of claims 32 to 36, wherein the serial number of the first data unit comprises a packet number PN of the first data unit, and the PN is for numbering a data unit sent to the terminal.

38. The method according to claim 37, wherein the first data unit is a data unit that belongs to a second service, the serial number of the first data unit further comprises a sequence number SN of the first data unit, and the SN is for numbering a data unit that belongs to the second service.

39. The method according to claim 38, wherein the method further comprises:
receiving, by the controller, a service identifier that is of the second service and that is sent by the first AP; and
sending, by the controller, the service identifier of the second service to the second AP, wherein the second data unit is a data unit that belongs to the second service.

40. The method according to claim 38 or 39, wherein the first serial number comprises the serial number of the first data unit, and the receiving, by a controller, a first serial number sent by a first access point AP comprises:
receiving, by the controller, a first packet sent by the first AP, wherein the first packet comprises a packet number field and a sequence number field, the packet number field comprises the PN of the first data unit, and the sequence number field comprises the SN of the first data unit; and
the sending, by the controller, the first serial number to the second AP comprises:
sending, by the controller, a second packet to the second AP, wherein the second packet comprises the packet number field and the sequence number field.

41. The method according to any one of claims 32 to 40, wherein the first data unit is a last data unit that has been sent by the first AP to the terminal when the AP that communicates with the terminal is switched from the first AP to the second AP, or the first data unit is a previous data unit of the last data unit.

42. A communication apparatus, wherein the communication apparatus comprises a processing unit and a communication unit, wherein
the communication unit is configured to perform a sending operation and/or a receiving operation performed by the first access point AP in the method according to any one of claims 11 to 20; and
the processing unit is configured to perform an operation other than the sending operation and the receiving operation and performed by the first AP in the method according to any one of claims 11 to 20.

43. A communication apparatus, wherein the communication apparatus comprises a processing unit and a communication unit, wherein
the communication unit is configured to perform a sending operation and/or a receiving operation performed by the second access point AP in the method according to any one of claims 21 to 31; and
the processing unit is configured to perform an operation other than the sending operation and the receiving operation and performed by the second AP in the method according to any one of claims 21 to 31.

44. A communication apparatus, wherein the communication apparatus comprises a processing unit and a communication unit, wherein
the communication unit is configured to perform a sending operation and/or a receiving operation performed by the controller in the method according to any one of claims 32 to 41; and
the processing unit is configured to perform an operation other than the sending operation and the receiving operation and performed by the controller in the method according to any one of claims 32 to 41.

45. A first access point AP, wherein the first AP comprises a memory, a processor, and a computer program stored in the memory; and when the processor executes the computer program, the first AP is enabled to implement the method according to any one of claims 11 to 20.

46. A second access point AP, wherein the second AP comprises a memory, a processor, and a computer program stored in the memory; and when the processor executes the computer program, the second AP is enabled to implement the method according to any one of claims 21 to 31.

47. A controller, wherein the controller comprises a memory, a processor, and a computer program stored in the memory; and when the processor executes the computer program, the controller is enabled to implement the method according to any one of claims 32 to 41.

48. A communication system, wherein the communication system comprises the apparatus according to claim 42 and the apparatus according to claim 43, or the communication system comprises the first access point AP according to claim 45 and the second AP according to claim 46.

49. The communication system according to claim 48, wherein the communication system further comprises the apparatus according to claim 44 or the controller according to claim 47.

50. A computer-readable storage medium, wherein the computer-readable storage medium stores a computer program or instructions; and when the computer program or the instructions are executed by a processor, the method according to any one of claims 11 to 41 is implemented.

51. A computer program product, wherein the computer program product stores a computer program; and when the computer program is executed by a processor, the method according to any one of claims 11 to 41 is implemented.
